(19) Europäisches Patentamt
European Patent Office
Office européen des brevets

(11) Numéro de publication : **0 347 325 B1**

(12) # FASCICULE DE BREVET EUROPEEN

(45) Date de publication du fascicule du brevet : **19.10.94 Bulletin 94/42**

(51) Int. Cl.$^5$ : **H04N 11/00,** H04N 7/00

(21) Numéro de dépôt : **89401685.6**

(22) Date de dépôt : **15.06.89**

(54) **Procédé et installation de diffusion de programmes de télévision haute définition compatible.**

(30) Priorité : **16.06.88 FR 8808096**

(43) Date de publication de la demande : **20.12.89 Bulletin 89/51**

(45) Mention de la délivrance du brevet : **19.10.94 Bulletin 94/42**

(84) Etats contractants désignés : **DE FR GB IT NL**

(56) Documents cités :
**GB-A- 2 194 409**
**COLLOQUE TVHD 87, Ottawa, 4-8 octobre 1987, vol. 1, pages 6.2.2 - 6.2.28; P.BERNARD et al.: "Analyse de structures de sous-échantillonnage spatio-temporel d'un signal TVHD en vue de sa transmission dans un canal MAC"**
**IEEE TRANSACTIONS ON COMMUNICATIONS, vol. 36, no. 3, mars 1988, pages 347-354, IEEE, New York, US; M. TANIMOTO et al.: "TAT (Time-Axis Transform) bandwidth compression system of picture signals"**

(73) Titulaire : **FRANCE TELECOM**
**6, Place d'Alleray**
**F-75015 Paris (FR)**
Titulaire : **Etablissement Public Télédiffusion de France**
**10, rue d'Oradour-sur-Glane**
**F-75015 Paris (FR)**

(72) Inventeur : **Bernard, Philippe**
**Rue du Clos Courtel**
**B.P. 59 - 35512 Cesson Sevigne (FR)**
Inventeur : **Colaitis, Marie-Jean**
**Rue du Clos Courtel**
**B.P. 59 - 35512 Cesson Sevigne (FR)**

(74) Mandataire : **Fort, Jacques**
**CABINET PLASSERAUD**
**84, rue d'Amsterdam**
**F-75009 Paris (FR)**

EP 0 347 325 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne la diffusion de programmes de télévision fournissant une image à haute définition, à 1250 lignes, sur des canaux de diffusion ayant une largeur insuffisante pour transmettre intégralement tous les pixels de toutes les trames vidéo successives. Cette situation impose des techniques de traitement d'image réduisant le volume d'informations à transmettre. En général, ces techniques de traitement d'images comprennent un sous-échantillonnage spatio-temporel et une compensation de mouvements impliquant le calcul d'un champ de vecteurs de mouvement lors de l'analyse de l'image avant diffusion, la transmission de données d'assistance contenant ce champ de vecteurs lors de la diffusion et enfin, lors du décodage dans un récepteur destiné à fournir une image haute définition, l'utilisation des données d'assistance pour reconstituer cette image.

L'un des problèmes que pose ce mode de diffusion est l'existence simultanée de récepteurs haute définition et de récepteurs de première génération qui doivent l'un et l'autre fournir une image de bonne qualité. Or, le sous-échantillonnage temporel, notamment à saut de trame ou d'image, conduit à des saccades de l'image restituée par un récepteur de première génération qui ne peut faire l'usage des données d'assistance pour y remédier.

Bien que ce problème soit de nature générale, il sera surtout fait référence dans ce qui suit à la diffusion de programmes de télévision par le système HD-MAC défini par le projet européen EUREKA EU95. La transmission d'une image haute définition à 1250 lignes de 1440 points exigerait, lorsqu'elle est effectuée à l'aide d'un multiplex en bande de base de données numériques et d'un multiplex de signaux analogiques de chrominance et de luminance, une largeur de bande très supérieure à celle offerte par les canaux de diffusion à partir de satellites. Pour réduire le débit d'informations nécessaires, il est prévu de faire appel :

- pour les images à faible activité temporelle, à un sous-échantillonnage purement temporel, étalant les informations spatiales d'une ou plusieurs images sources analysées sur plusieurs trames de transmission successives ;
- pour les images à forte activité temporelle, à un sous-échantillonnage spatial plus large ou à un traitement non linéaire du signal, par compensation de mouvements, qui conduit à ne plus respecter l'analyse à 50 Hz des images source et implique l'utilisation de données d'assistance transmises pour que le décodeur HD puisse reconstruire l'image.
- pour les images à très forte activité temporelle (amplitude du vecteur plus forte que l'excursion de l'estimation de mouvement) ou pour des zones d'image à mouvement dit "erratique", à un sous-échantillonnage spatial de chaque trame d'analyse.

Dans ce qui suit, on envisagera en particulier le cas où les images source (ou les portions d'images source) à forte activité temporelle sont diffusées en répartissant sur deux trames de transmission successives les lignes alternées d'une même trame (trame video impaire) de l'image source vidéo. A la réception, le contenu des deux trames de transmission est utilisé pour reconstituer une même trame vidéo impaire de l'image haute définition et les trames vidéo manquantes (trames paires) sont reconstituées à partir des trames vidéo disponibles (trames impaires) et des données d'assistance transmises séparément et donnant une indication sur le champ de vecteurs de mouvement.

Une description de ce procédé de diffusion est donnée dans la communication de P. Bernard et al "Analyse de structures de sous-échantillonnage spatio-temporel d'un signal TV-HD en vue de sa diffusion dans un canal MAC", colloque TVHD 87, Ottawa, 4-8 Oct. 1987 Vol. 1, pp. 6.2.2-6.2.28.

Des techniques de sous-échantillonnage spatio-temporel et d'interpolation à la réception sont également décrites dans le document GB-A-2 194 409.

Mais un récepteur de première génération reproduira intégralement, sous forme de deux trames vidéo successives, deux trames de transmission correspondant à la même trame de balayage HD (image source à un instant déterminé), d'où des saccades sur les images à forte activité temporelle puisque la cadence d'analyse sera en fait de 25 Hz.

Si l'on tente de substituer à la technique de sous-échantillonnage ci-dessus, dite "field skip" ou "à saut de trame", la transmission d'un point sur quatre seulement de chacune des trames successives (c'est-à-dire d'effectuer un sous-échantillonnage spatial plus large), on dégrade considérablement l'image fournie par le récepteur HD-MAC qui ne dispose plus d'aucune trame vidéo complète.

On ne peut pas non plus envisager de constituer la seconde trame de transmission de chaque couple par des points qui ne sont pas les points de l'image source, mais des points décalés pour tenir compte du vecteur mouvement au point source, car cette méthode se heurte aux problèmes de zones à recouvrement ou découvrement qui ne respecte plus la bijectivité entre les points à transmettre et les points transmis.

L'invention vise à fournir un procédé de diffusion de programmes de télévision haute définition permettant d'améliorer notablement l'image reçue par les récepteurs de première génération sans dégradation appréciable de l'image fournie par un récepteur haute définition.

Dans ce but l'invention propose un procédé de diffusion de programmes de télévision à haute définition sur canal étroit, conforme à la revendication 1.

Lors de la réception haute définition, on accentue temporellement les points de la trame (ou des trames) d'image correspondant à la trame paire (ou aux trames) de transmission autres que la première trame impaire de transmission avant le traitement de reconstitution de l'image haute définition. Au contraire, un récepteur de première génération utilisera telles quelles les trames transmises en tant que trames d'image et l'atténuation temporelle écartera dans une large mesure l'effet cinéma.

L'invention sera mieux comprise à la lecture de la description qui suit d'un mode particulier de mise en oeuvre, donné à titre d'exemple non limitatif. Cet exemple concerne spécifiquement la diffusion de programmes HD-MAC sur voie satellite, avec, entre autres sous-échantillonnages, un sous-échantillonnage spatio-temporel de type dit à saut de trame ("field skip") mais cette application n'est nullement exclusive. L'invention pourrait être directement transposée à d'autres techniques de sous-échantillonnage spatio-temporel, notamment à saut d'image (frame skip) et à des systèmes de transmission autres que MAC, n'utilisant pas un multiplex analogique en bande de base de signaux de luminance et de signaux de chrominance.

La description se réfère aux dessins qui l'accompagnent, dans lesquels :

- la Figure 1 est un schéma de principe montrant l'ensemble des étapes intervenant dans le traitement du signal vidéo (de luminance ou de chrominance) depuis l'analyse de la source jusqu'à la restitution sous forme d'image haute définition ou sous forme d'image compatible sur récepteur de première génération ;
- la Figure 2 est un schéma montrant la séquence d'analyse d'une fraction de l'image source, de transmission et de reconstruction de l'image haute définition dans le cas du sous-échantillonnage à saut de trame ;
- la Figure 3 montre le mode d'échantillonnage de l'image source dans le cas de la technique à saut de trame, sans mise en oeuvre de l'invention ;
- les Figures 4 et 5 sont des schémas montrant la détermination du point transmis, respectivement suivant un mode qui assurerait la compensation de mouvement pour l'image compatible et suivant l'invention ;
- la Figure 6 montre la reconstruction d'un point d'image de la trame impaire haute définition à partir de trames transmises du type montré en Figure 5 ;
- la Figure 7 montre un mode possible d'interpolation applicable au mode d'analyse de la Figure 6 pour réaliser une atténuation dans le sens du mouvement ;
- la Figure 8, similaire à la Figure 7, illustre un mode de sélection de paramètres d'atténuation, utilisable dans la mise en oeuvre de l'invention ;
- la Figure 9 montre un mode de quantification possible des parties fractionnaires des vecteurs mouvement avant utilisation pour le mode d'analyse montrée en Figure 7 ;
- la Figure 10 est un schéma d'ensemble d'un codeur HD-MAC utilisable dans l'installation montrée en Figure 1 ;
- la Figure 11 est un synoptique montrant une constitution générale possible de circuit d'atténuation dans le sens du mouvement, utilisable pour la mise en oeuvre de l'invention et mettant en oeuvre le mode de sélection illustré en Figure 8 ;
- les Figures 11A et 11B sont des schémas montrant une constitution possible des circuits 34 à 60 de la Figure 11 ;
- la Figure 11C est un tableau indiquant la nature des composants montrés en Figures 11A et 11B (chaque composant ayant une bascule de verrouillage de sortie) ;
- la Figure 12 est un schéma possible de certains des modules de la Figure 11 ;
- les Figures 13 et 14 sont des tableaux donnant des valeurs possibles de coefficients de pondération intervenant dans la compensation de mouvement ;
- la Figure 15 montre un exemple de transformation provoquée par mise en oeuvre de l'invention.

Avant de décrire l'invention en faisant référence aux dessins ci-joints, on définira certaines des notations utilisées.

On désignera par trames d'analyse T1 et T2 les trames impaires et paires d'analyse de l'image source, les lignes des trames paires étant entrelacées avec les lignes des trames impaires et seuls étant transmis les signaux définissant des points situés dans les trames impaires lorsque le sous-échantillonnage spatio-temporel s'effectue par saut de trame.

On appellera "image compatible" avec un récepteur de première génération, l'image que délivre ce récepteur lorsqu'il est alimenté, par l'intermédiaire d'un canal de transmission, par une émission codée par un codeur haute définition à compression spatio-temporelle (par saut de trame dans le cas particulier qui sera seul envisagé par la suite).

On désignera par trames de transmission t1 et t2 les trames successives de transmission successives impaires et paires ; par "point à transmettre A", un point de l'image source appartenant à la trame d'analyse T1 haute définition à transmettre et qui, du fait du saut de trame, est transmis non pas sur une trame t1 mais sur une trame t2 (cette définition pouvant se généraliser et notamment s'appliquer au cas du saut d'image, auquel cas quatre trames de transmission correspondent à une même trame ou image d'analyse) ; et par "point de transmission" un point en phase spatialement et temporellement avec le point C effectivement transmis sur une trame t2.

La Figure 1 montre le synoptique général de diffusion d'une image haute définition. L'image source 10 est analysée et soumise à un codage haute définition en 12. Ce codage met en oeuvre, sur une voie au moins, des techniques de compression spatio-temporelle qui donnent naissance, d'une part, à deux trames de transmission t1 et t2 pour chaque trame T1 impaire, d'autre part, à des données d'assistance DA, identifiant notamment un champ de vecteurs mouvement. En l'absence de mise en oeuvre de l'invention, les données d'assistance DA et les trames t1 et t2 sont directements émises sur un support de transmission 14. Chaque récepteur haute définition effectue le décodage haute définition en 16 et fournit sur un écran une image 18 à 1250 lignes de 1440 points.

Dans un récepteur de première génération 20 au contraire, les trames transmises sont directement décodées en 22 sans utilisation des données d'assistance et fournissent une image compatible 24, à 625 lignes, sur laquelle des points correspondant à l'image source au même instant, analysée à une cadence de 25 Hz, sont répartis en deux trames vidéo successives décalées temporellement de 20 ms.

Il est à l'heure actuelle prévu d'effectuer le codage HD (haute définition) en 12 de façon adaptative à l'activité temporelle de l'image.

En cas d'activité temporelle non nulle, on effectue un simple sous-échantillonnage spatio-temporel de l'image source qu'on répartit sur plusieurs trames (deux trames dans le cas du saut de trame) ce qui conduit à transmettre sur deux trames de transmission t1 et t2 des informations de l'image source contenues dans un même plan temporel, correspondant à une seule trame T1, les trames T1 se répétant à une cadence de 25 Hz.

Dans un récepteur HD, la reconstitution des trames vidéo d'ordre pair s'effectue à partir des trames vidéo d'ordre impair, entièrement préservées par la transmission, en utilisant le champ de vecteurs de mouvement transmis dans les données d'assistance. Mais les récepteurs de première génération destinés à fournir une image compatible n'exploitent pas ces données d'assistance et on constate en conséquence des saccades d'images, notamment visibles aux frontières entre les portions d'image en déplacement et le fond.

Les Figures 2 et 3 montrent schématiquement comment s'effectuent l'analyse, la transmission et la reconstruction. Au cours de l'analyse, seuls sont retenus les points e et e′, parmi les points de l'ensemble des points constituant l'image haute définition (e + e′ +,), répartis sur les trames d'analyse et de restitution T1 et T2 qui constituent également les trames vidéo HD de restitution. La direction des lignes est horizontale sur les Figures. Comme l'indiquent les flèches entre la partie "analyse" et la partie "transmission" de la Figure 2, les points e et e′ retenus lors de l'analyse d'une image à un instant donné sont répartis sur deux trames de transmission successives t1 et t2, émises avec un décalage de 20 ms dans le cas d'une cadence de balayage à 50 Hz. L'image haute définition est reconstituée dans un récepteur haute définition par compensation de mouvement. L'échantillonnage de l'image est conforme au schéma de la Figure 3, les virgules désignant les points non transmis.

Lors de la reconstruction de l'image haute définition, tous les points disponibles provenant des trames de transmission t1 et t2 sont ré-incorporés dans les trames impaires T1.

Les trames T2 sont reconstituées en utilisant le champ de vecteurs mouvement V qui permettent de déterminer la valeur des points o des trames paires à partir des valeurs aux points e et e′ transmis, éventuellement des points x reconstitués, et des vecteurs vitesse.

Cette reconstruction, essentielle pour obtenir une image de bonne qualité, implique de disposer de l'ensemble des points e et e′ et implique qu'ils ne soient pas entachés d'un bruit excessif.

Or, si on souhaitait améliorer l'image compatible (dont les trames vidéo reproduisent purement et simplement les trames de transmission t1 et t2 montrées en Figure 2), il serait nécessaire de tenir compte du vecteur mouvement et de donner aux points e′ sur les trames de transmission paires des valeurs qui pourraient être très différentes de celles qui permettent la reconstitution par le décodeur HD. Cela reviendrait à substituer, à un point e′ transmis sur une trame de transmission paire dans le cas de la Figure 2, un point ayant une valeur x qui est celle d'un point virtuel dans la trame T1, constituant le projeté inverse dans le sens du mouvement du point de transmission C (Figure 4). Mais on perdrait ainsi l'information concernant le point à transmettre A, nécessaire pour reconstruire l'image HD, ce qui n'est pas acceptable.

Pour tout à la fois conserver l'information nécessaire à la reconstitution de l'image haute définition et éviter de dégrader de façon excessive l'image compatible, l'invention :

- conserve intégralement les points de la trame d'analyse impaire T1 qui sont transmis sur les trames de transmission t1,
- effectue, sur les points de la trame d'analyse impaire T1 qui sont transmis sur les trames de transmission paires t2 une moyenne pondérée entre la valeur (luminance ou chrominance) du point de la trame T1 à transmettre sur t2 et celle du point virtuel, obtenu par projection inverse du point transmis sur la trame t2 selon le vecteur mouvement estimé en ce point de transmission, le point virtuel ou point d'impact étant calculé à partir des points transmis sur la trame impaire t1 de transmission.

Cette opération revient à une atténuation dans le sens du mouvement.

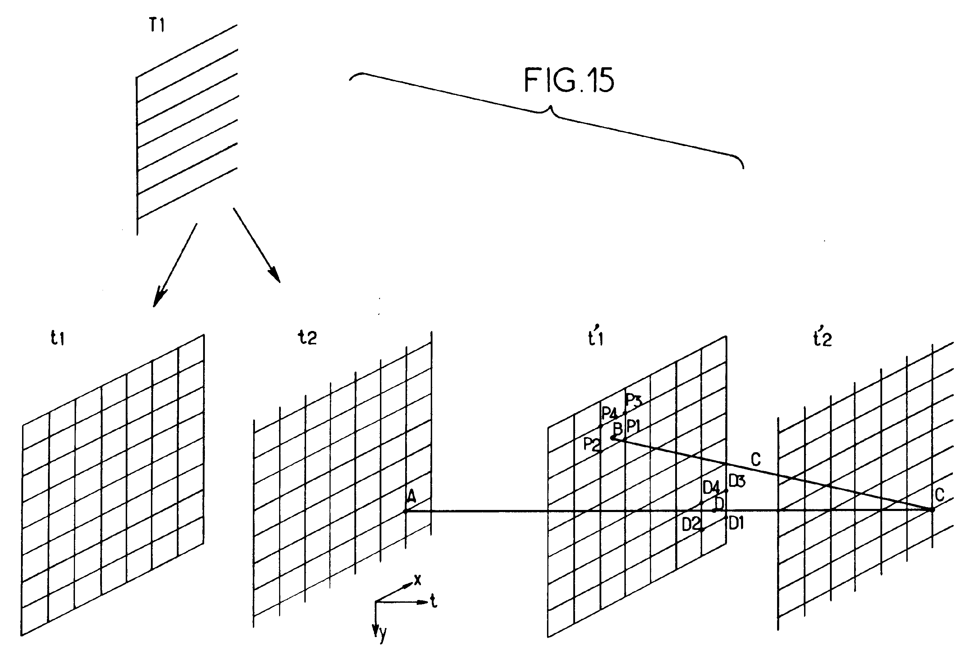

Les schémas des Figures 5 et 6 font mieux comprendre le principe de l'invention : sur la Figure 5 les points de la trame d'analyse T1 sont désignés par e et e'. On a indiqué la trame d'analyse (trame source) T1, et le résultat du codage HD-MAC, à savoir les trames t1 et t2. On a également indiqué le résultat du procédé suivant l'invention qui opère sur ces trames t1 et t2 et fournit deux nouvelles trames t'1 et t'2. t'1 est identique à t1, mais t'2 est différente de t2. B désigne le projeté inverse du point de transmission x dans le sens du mouvement, qu'on appellera par la suite "point d'impact" du vecteur mouvement. Un bon suivi du mouvement imposerait de transmettre le point virtuel B plutôt que le point x dérivé du point A de la trame impaire T1 correspondante. Mais dans ce cas le point transmis ne contiendrait plus d'information sur le point à transmettre. Pour la conserver, conformément à l'invention, on génère le point transmis C en effectuant une moyenne pondérée entre le point A de la trame à transmettre et le point virtuel B, c'est-à-dire le point d'impact, comme cela est indiqué schématiquement sur les Figures 5 et 15.

Le décodeur haute définition effectue une accentuation qui restitue les informations initiales, telles qu'elles existaient avant atténuation : on retrouve le point à transmettre à partir du point transmis et à partir du vecteur mouvement estimé en ce point, calculé dans le codeur et transmis au décodeur dans les données d'assistance. Ce calcul de restitution est schématisé en Figure 6.

Le schéma fonctionnel de la chaîne de codage et de décodage peut alors être celui montré en Figure 10 (où les étapes correspondant aux composants identifiés en Figure 1 portent le même numéro de référence). Sur la Figure 10, où seul est représenté le schéma de codage et de décodage HD, l'image analysée est soumise à des traitements linéaires de préfiltrage en 20 correspondant aux différentes voies de traitement. Parallèlement, l'image est soumise à estimation de mouvements en 22 et à l'opération de traitement non linéaire de compensation de mouvements en 24. Un bloc 26 de sous-échantillonnage adaptatif détermine a posteriori, par comparaison des images fournies par les différentes voies qui y aboutissent avec l'image d'origine, laquelle des sorties doit être émise. Parallèlement, un bloc d'informations sur l'activité spatio-temporelle 27 incorpore aux données d'assistance DA la valeur des vecteurs mouvement nécessaires à la reconstruction ainsi qu'une information de commutation indiquant la nature du traitement retenu.

Le récepteur reçoit donc non seulement les trames de transmission, mais aussi une information de commutation indiquant quelle voie de traitement a été utilisée lors du codage ainsi que la valeur du vecteur mouvement en chaque point traité selon la voie ayant donné lieu à compensation.

L'estimation du vecteur mouvement V n'est pas concernée par la présente invention et ne sera donc pas décrite. Mais on indiquera, en faisant référence aux Figures 7 et 8, le mode de transmission de ce vecteur mouvement V.

Pour cela, on utilisera les notations suivantes, dont certaines sont reprises sur la Figure 7. On désignera par :

| | |
|---|---|
| $I_o(x,y,t)$: | la valeur initiale de la luminance ou de la chrominance au point de l'image source de coordonnées (x,y), à l'instant t de l'analyse, |
| $I_t(x,y,t)$: | la valeur transmise, après atténuation, pour le point (x,y) et l'instant t, |
| $I_r(x,y,t)$: | la valeur après accentuation, pour le point (x,y) et l'instant t, |
| $I_v(x,y,t-T)$ : | la valeur au point projeté (point d'impact) dans le sens inverse d'un vecteur mouvement V estimé, pour le point (x,y,t) tel que transmis sur la trame t2, |
| Vx : | la valeur suivant la direction x (direction de ligne) du vecteur mouvement V, estimé sur une image HD au point transmis, |
| Vy : | la valeur suivant la direction y du vecteur mouvement V, estimé au point transmis. |

Dans le cas illustré sur la Figure 7, on effectue une interpolation bilinéaire utilisant les quatre points e de la trame de transmission t1 entourant le point d'impact B du vecteur mouvement, désignés par P1, P2, P3, P4. Le vecteur mouvement V lui-même est avantageusement quantifié sur un petit nombre de valeurs s'il n'est pas déjà entier (quatre dans le cas montré en Figure 9) pour simplifier les calculs. La démarche est la suivante : dans un premier temps on détermine les quatre points P1, P2, P3 et P4 les plus proches du point d'impact B par un calcul de valeurs entières des déplacements suivant les directions x et y liés aux valeurs Vx et Vy du mouvement. Ces quatre points voisins appartiennent à la trame t1 transmise sans prétraitement, de façon que le même calcul puisse être effectué dans le décodeur. La position des points retenus varie selon la période

image selon un échantillonnage horizontal d'un point sur deux. L'interpolation bilinéaire s'effectue par deux interpolations linéaires en x et y, puis par produit des deux interpolations, comme cela apparaîtra plus loin en faisant référence aux Figures 11 et 12.

Une solution plus simple, mais moins avantageuse, consisterait à "forcer" le point B en celui des points P1, P2, P3 et P4 qui en est le plus proche.

Une fois déterminé le point B, l'atténuation dans le sens du mouvement doit être effectuée. Cette atténuation est effectuée par un calcul de moyenne pondérée entre le point à transmettre A et le point B. Dans le cas, seul considéré ici, du saut de trame, les trames transmises de parité impaire t1 sont inchangées. Les trames transmises de parité paire t2 sont soumises à l'atténuation qui peut être suivant la formule donnant la valeur transmise $I_t$ :

$$I_t(x,y,t) = a\, I_o(x,y,t - T) + (1 - a) I_V(x,y,t - T)$$

où T désigne la période trame de transmission, c'est-à-dire 20 ms dans le cas du standard européen, et a est un coefficient inférieur à l'unité. On peut considérer arbitrairement que a = 1 dans le cas des trames impaires de transmission.

Il reste à choisir la valeur affectée à a pour les trames paires de transmission. Cette valeur de a influe directement sur le bruit qui affecte l'image haute définition restituée. En effet l'accentuation se traduit par une intensité $I_r$ :

$$I_r(x,y,t - T) = [I_t(x,y,t) - (1 - a) I_V(x,y,t - T)]/a$$

Le terme a intervient au dénominateur et une valeur élevée de a donne donc une grande importance au bruit apparaissant au numérateur.

Il est en conséquence avantageux d'adopter une valeur de a qui n'est pas fixe mais dépend :

- de l'amplitude du vecteur mouvement, puisque l'effet de saccade est d'autant plus gênant sur l'image compatible que le vecteur mouvement a une valeur plus grande,
- du contenu de l'image, car les saccades ne sont gênantes que lorsque l'information à transmettre change de trame à trame, c'est-à-dire aux points qui représentent des frontières.

On peut utiliser une atténuation adaptative, fonction de l'amplitude du vecteur mouvement et fonction du contenu de l'image, et notamment utiliser la loi suivante d'adaptation du coefficient a.

Pour l'application de cette loi, on définit le paramètre VM représentatif du mouvement comme :

$$VM = /Vx/ + /Vy/$$

où

Vx est la partie entière de $V_ox$

Vy est la partie entière de $V_oy$

et on adopte un coefficient a résumé par le Tableau I :

**TABLEAU I**

| | |
|---|---|
| 0 ≤ VM < 1 | a = 1 |
| 1 ≤ VM < 3 | a = 3/4 |
| 3 ≤ VM < 5 | a = 3/5 |
| 5 ≤ VM | a variable |

De façon plus complète, la loi est :

- coefficient de pondération a du point courant A nul pour les faibles mouvements, par exemple inférieurs, au sens strict, à 1 pixel haute définition par trame,
- coefficient de pondération a égal à 3/4 pour les mouvements faibles (1 à 2 pixels par trame HD),
- coefficient de pondération a égal à 3/5 pour les mouvements compris entre 3 et 4 pixels,
- au-delà de 5 pixels par trame, coefficient de pondération variable entre 3/5 et 98/256, en fonction de la différence d'intensités du point réel et du point virtuel.

Le Tableau II ci-dessous donne une règle possible de sélection du coefficient de pondération, à partir de deux seuils de base S1 et S2 qui définissent à leur tour cinq seuils de choix de a en fonction de la différence

d'intensités $V_M$, lorsqu'elle est au moins égale à 5. Suivant la valeur de $\delta = |BH-D|$, où BH est le résultat d'un filtrage à pondération 1-2-1 sur B, dans le sens horizontal:

Tableau II

| δ | a | th |
|---|---|---|
| 0≤.<th1=S1 | 3/5. | th1 = 25 |
| th1≤.<th2=S1+(S2-S1)/4 | 140/256. | th2 = 29 |
| th2≤.<th3=S1+(S2-S1)/2 | 128/256. | th3 = 33 |
| th3≤.<th4=S1+(S2-S1)*3/4 | 117/256. | th4 = 37 |
| th4≤.<th5=S2 | 107/256. | th5 = 41 |
| th5≤. | 98/256 | |

Dans l'exemple donné, S1 et S2 sont respectivement égaux à 25 et 41.

Une telle loi ne permet d'adopter un coefficient de pondération élevé, égal à 98/256, que lorsque le point C à transmettre est nettement différent du point virtuel B correspondant.

Les atténuations données ci-dessus ne sont nullement limitatives. Dans la pratique on pourra choisir, au lieu de 3/4, une valeur comprise entre 1 et 3/5 ; au lieu de 3/5 une valeur comprise entre 3/4 et 1/2 ; et, au lieu de 98/256, une autre valeur comprise entre 1/2 et 1/3.

La Figure 8 montre la façon dont la commutation entre les diverses valeurs possibles du coefficient d'atténuation a peut être commandée par l'évaluation de V. Sur la Figure 8 les points à comparer sont, d'une part, un pseudo-point D qui résulte d'une moyenne de quatre points e (désignés par D1, D2, D3 et D4) de la trame de transmission t1 entourant le point à transmettre et, d'autre part, le point virtuel B correspondant. Le point D est obtenu en faisant la moyenne pondérée des quatre points e de la trame t1 qui entoure le point à transmettre, désignés par D1, D2, D3 et D4.

Etant donné que le bruit de transmission peut conduire, à la réception, à des indications erratiques, la valeur de B sur une seule trame impaire peut être remplacée, pour la comparaison, par une moyenne pondérée sur plusieurs points B successifs, par exemple sur trois points successifs en horizontal, avec des coefficients de pondération égaux à 0,5 pour le point courant, 0,25 pour les points précédent et suivant.

Des solutions plus simples ou plus complexes que celle qui vient d'être exposée sont également possibles. En particulier, les coefficients de pondération peuvent être commutés uniquement en fonction de la valeur du vecteur vitesse, avec comme inconvénient l'augmentation du bruit affectant les images haute définition à forte valeur de mouvement.

Si l'on revient maintenant à la Figure 1, on voit que le codeur haute définition 12 est suivi d'un bloc d'atténuation et de commutation 30, tandis que, de façon symétrique, le décodeur 16 du récepteur est précédé d'un bloc d'accentuation et de commutation 32. Le bloc de commutation mélange les trames traitées et non traitées, en fonction de l'information de données d'assistance, suivant un schéma général qui peut être celui de la Figure 10. Symétriquement, l'information de données d'assistance détermine si, dans le cas d'une image reconstruite, il y a eu ou non atténuation. Dans le cas d'atténuation à l'émission, il y a commutation sur la voie d'accentuation avant application au décodeur 16.

Le bloc d'atténuation et de commutation 30 doit comporter une mémoire de trame d'entrée 34, en raison du retard temporel entre les trames de transmission de parité paires t2 et les trames de transmission de parité impaires t1. De même, une mémoire de trame 36 est nécessaire dans le bloc d'accentuation et de commutation 32. Mais dans la pratique, la plupart des décodeurs existants comportent une mémoire ayant une capacité suffisante pour recevoir une trame, de sorte qu'aucun composant supplémentaire de grande taille n'est à prévoir.

La Figure 11 montre les opérations effectuées dans le bloc d'accentuation et de commutation 30. La sortie I(X,t) du décodeur 12 est appliquée directement au commutateur 38 de sortie du bloc et à la mémoire video 34, de capacité correspondant à l'ensemble d'une trame video. Cette mémoire a pour rôle de stocker l'ensemble des points constituant une trame d'ordre impair à la fois. Cette mémoire est donc chargée tous les 50èmes de seconde. Cette mémoire a une capacité d'une trame complète plus quelques lignes qui fonctionnent en mémoire glissante. On évite ainsi la nécessité d'une mémoire à accès aléatoire. La mémoire est munie de quatre accès simultanés en lecture, permettant de charger une mémoire intermédiaire de calcul 40 des quatre points permettant le calcul du point d'impact B, comme indiqué en Figure 7 : on constitue ainsi une fenêtre glissante. Etant donné que l'amplitude du vecteur mouvement V est très variable, il sera souvent nécessaire d'accéder à des points de la trame qui sont sur les lignes différentes de celles de l'image courante, d'où la nécessité qu'une mémoire video corresponde à une trame complète et donne accès multiples dans n'importe quel point de la trame.

L'adressage de la mémoire video 34 est effectué par un circuit de calcul 49 qui fournit l'adresse des quatre points à stocker en mémoire 40. Ce circuit de calcul reçoit pour cela, d'une part, la valeur X sur la ligne courante, d'autre part, les deux composantes $V_ox$ et $V_oy$ du vecteur vitesse.

Ces composantes sont établies à partir des données d'assistance DA, en tenant compte du fait que la structure transmise sera une structure quinconce trame ayant deux fois moins de points et deux fois moins de lignes que dans l'analyse d'origine. Comme l'interpolation du point d'impact doit être effectuée uniquement à partir des points qui seront transmis sur les trames de transition t1, on dispose seulement pour l'interpolation d'une ligne sur quatre et d'un point sur deux. Et enfin, le point à corriger sur chaque trame t2 est déphasé de l'intervalle entre deux points haute définition et de l'intervalle entre deux lignes haute définition par rapport aux points transmis sur la trame t1 correspondante.

Les circuits de la Figure 11 comprennent des moyens de traitement des vecteurs mouvement, contenus dans les données d'assistance 44, permettant de rattraper le déphasage et de normaliser les composantes du vecteur mouvement afin de déterminer les points voisins, P1, P2, P3 et P4 (Figure 8).

La première opération, effectuée par le circuit 44, consiste à rattraper le déphasage d'un point sur une ligne, et de deux lignes sur la trame t1.

Les vecteurs vx et vy corrigés du point de vue déphasage sont obtenus, à partir des vecteurs $v_ox$ et $v_oy$ estimés au point X(x,y) à l'instant t par la formule :

$$vx = v_ox - 1$$
$$vy = v_oy + 2$$

L'étape suivante consiste à normaliser les vecteurs par l'opération :

$$vx/2 \rightarrow vx \qquad \text{(en entier)}$$
$$vy/4 \rightarrow vy$$

A partir de là, les points P1, P2, P3 et P4 voisins du point d'impact B doivent être calculés.

Si ensuite on adopte les conventions :

u = +1 si vx est positif
u = -1 si vx est négatif
v = +1 si vy est positif
v = -1 si vy est négatif

les quatre points voisins du point d'impact seront alors :

$$P3 = (x - vx, y - vy) = (x+dx1, y+dy2)$$
$$P1 = (x - vx, y - v - vy) = (x+dx1, y+dy1)$$
$$P2 = (x - u - vx, y - v - vy) = (x+dx2, y+dy1)$$
$$P4 = (x - u - vx, y - vy) = (x+dx2, y+dy2).$$

P1, P2, P3 et P4 sont obtenus par lecture d'une table mémorisée, telle que celle du Tableau III ci-dessous :

TABLEAU III

| Vx | dx1 | dx2 | Vy | dy1 | dy2 |
|---|---|---|---|---|---|
| -6 | -3 | -4 | -6 | -2 | non utilisé |
| -5 | -2 | -3 | -5 | -1 | -2 |
| -4 | -2 | -3 | -4 | -1 | -2 |
| -3 | -1 | -2 | -3 | -1 | -2 |
| -2 | -1 | -2 | -2 | -1 | -2 |
| -1 | 0 | -1 | -1 | 0 | -1 |
| 0 | 0 | -1 | 0 | 0 | -1 |
| 1 | 1 | 0 | 1 | 0 | -1 |
| 2 | 1 | 0 | 2 | 0 | -1 |
| 3 | 2 | 1 | 3 | 1 | 0 |
| 4 | 2 | 1 | 4 | 1 | 0 |
| 5 | 3 | 2 | 5 | 1 | 0 |
| 6 | 2 | 2 | 6 | 1 | 0 |

où

(x,y) sont les coordonnées de point courant

dx1 = (Vx + 1)/2 ; dx2 = (Vx - 1)/2

dy1 = (Vy + 1)/4 ; dy2 = (Vy - 3)/4

Vx est la partie entière de $V_o$x

Vy est la partie entière de $V_o$y.

Les emplacements des quatre points correspondants apparaissent à la sortie du circuit 49, qui reçoit également X(x,y). Les coefficients d'interpolation a bilinéaire (Figure 7) sont sélectionnés parmi les différentes valeurs prévues. Cette sélection s'effectue à partir de Vx et de Vy selon des tables qui peuvent être celles des Figures 13 et 14. Sur des Figures, G1, G2, G3 et G4 désignent les quatre coefficients de l'interpolation bilinéaire permettant d'obtenir B par la formule B = G1.P1 + G2.P2 + G3.P3 + G4.P4 ; Vx et Vy sont encore les valeurs entières de $v_o$x et $v_o$y. Les coefficients apparaissent à la sortie de 52.

La sélection peut cependant être omise, en donnant toujours la même valeur aux coefficients de pondération.

La sélection peut prendre en considération non pas le vecteur vitesse correspondant au point B d'une seule trame, mais à un point obtenu par pondération sur plusieurs points B successifs, comme indiqué plus haut. Dans le cas montré en Figure 11, les données mémorisées en 58 correspondant à deux points antérieurs et celle correspondant au point courant sont utilisées pour former une moyenne pondérée en 60, avec des coefficients égaux à 1, 2 et 1.

Le module d'interpolation bilinéaire 54 a pour rôle de fournir une valeur J(X,t-1) représentative du point B (Figure 7) à partir des quatre points voisins fournis par le circuit 40 et des valeurs quantifiées G1, G2, G3 G4. Les valeurs des quatre points P1, P2, P3 et P4 s'écrivent :

I(P3,t - 1), I(P1,t - 1), I(P2,t - 1), I(P4,t - 1)

Le résultat en sortie de ce module est :

J(X,t - 1) = G1xI(P1,t - 1) + G2xI(P2,t - 1) + G3xI(P3,t - 1) + G4xI(P4,t - 1).

La sortie du module 54 attaque un module de pondération adaptative 62 qui fournit la valeur du point C

à transmettre (Figure 5). Le module 56 reçoit le signal video I(X,t) et le signal sortant du module d'interpolation adaptative J(X,t-1) et fournit un signal :

$$K(X,t) = a\, I(X,t) + (1 - a)\, J(X,t - 1).$$

Le module de commutation adaptative 34 reçoit, d'une part, le signal non traite I(X,t), d'autre part, le signal K(X,t-1) provenant du module de pondération adaptative 62. La commutation est commandée par une information de mode fournie par le signal de données d'assistance DA. Pour une trame t2 à transmettre, si le mode de traitement du codeur correspond à une branche à compensation de mouvement, alors :

$$L(X,t) = K(X,t)$$

Si le mode utilisé au point calculé est tout autre, alors :

$$L(X,t) = I(X,t)$$

Le bloc de commutation et d'accentuation 32 associé au décodeur 16 comportera des modules de même nature que ceux montrés en Figure 11, à l'exception de ceux contenus dans le cadre en traits mixtes qui est généralement incorporé au décodeur. Mais le coefficient de pondération calculé doit être inversé.

Les différents modules décrits ci-dessus ont une constitution et un fonctionnement très simples. On décrira maintenant la constitution de principe et le fonctionnement séquentiel de certains d'entre eux, en utilisant encore la notation X(x,y) pour désigner un point d'abscisse x sur la ligne y.

La mémoire video 34 fonctionne alternativement en mode lecture et en mode écriture. Lors du chargement, la valeur du point courant d'origine X(x,y,t-T) de la trame T1 est stockée en mémoire de trame MI (t-1) et est dirigée vers la sortie. Lors de la lecture, les valeurs des quatre points

P1, à t - T
P2, à t - T
P3, à t - T
P4, à t - T

dont l'adresse est fournie par le module 49 de calcul de voisinage, sont appliquées au module d'interpolation bilinéaire 54.

Les modules 54 et 62 peuvent avoir la constitution montrée en Figure 12, qu'il n'est pas nécessaire de décrire étant donné sa simplicité.

On obtient ainsi un passage de trames issues du codeur, t1 et t2, à des trames de transmission t'1 et t'2 du genre montré par l'exemple de la Figure 15.

## Revendications

1. Procédé de diffusion de programmes de télévision à haute définition sur canal étroit, suivant lequel on soumet le signal d'analyse d'image source à haute définition à un sous-échantillonnage spatio-temporel et à un filtrage non-linéaire de compensation de mouvement, conduisant à transmettre les points représentatifs d'une même image source sur au moins deux trames de transmission successives (t1,t2) et à transmettre, en même temps que l'image, des données d'assistance (DA) définissant un champ de vecteurs mouvement, caractérisé en ce que, pour améliorer l'image compatible des parties à forte activité temporelle fournie par un récepteur n'exploitant pas les données d'assistance, on soumet, avant transmission, les points (A) à transmettre sur chacune des trames de transmission (t2) autre que la première trame de transmission (t1) correspondant à une même image source analysée à une atténuation temporelle dans le sens du mouvement pour donner naissance à une trame de transmission modifiée (t'2), ladite atténuation étant fonction du vecteur mouvement associé aux points à transmettre et affectant, à chaque point transmis (C) desdites parties dans la trame modifiée, une valeur de luminance intermédiaire entre celle de la position du point (A) dans l'image source analysée et celle de la position (B), dans la trame précédant celle comprenant le point A qui est projetée depuis la position (A) dans le sens opposé à celui du vecteur mouvement associé au point à transmettre (A).

2. Procédé selon la revendication 1, caractérisé en ce que, lors de la réception haute définition, on accentue temporellement les points de la trame (ou des trames) d'image correspondant à la trame (ou aux trames) de transmission autres que la première trame avant traitement de reconstitution de l'image haute définition.

3. Procédé selon la revendication 1, caractérisé en ce que, lors de la réception par un récepteur n'utilisant pas les données d'assistance et fournissant une image compatible, on utilise telles quelles les trames transmises

4. Procédé selon l'une quelconque des revendications 1 à 3, caractérisé en ce que ladite luminance à position projetée est déterminée par interpolation bilinéaire entre quatre points de la première trame de transmission (t1=t'1) entourant le point d'impact (B) qui est projeté depuis la position (A) dans le sens opposé à celui du vecteur mouvement associé au point à transmettre (A).

5. Procédé selon l'une quelconque des revendications 1 à 4, caractérisé en ce qu'on donne à chacun des points (C) transmis sur la seconde trame de transmission (t'2) modifiée une valeur $I_t$ déduite de la valeur $I_o$ du point dans la même trame de transmission (t2) et de la valeur $I_v$ du point à la position projetée par la formule :

$$I_t = a\, I_o + (1 - a)\, I_v$$

a étant un coefficient fixe ou adaptif ayant une valeur minimale de 1/3 et en ce qu'on donne au point de l'image HD restituée la valeur $I_r$ :

$$I_r = [I_t - (1 - a)\, I_v]/a.$$

6. Procédé selon la revendication 5, caractérisé en ce que le coefficient a est déterminé en fonction de l'amplitude du vecteur mouvement associé au point à transmettre (A) des trames de transmission (t2) autres que la première trame de transmission (t1) et du contenu de l'image.

7. Procédé selon la revendication 6, caractérisé en ce que l'on détermine le coefficient a par sélection binaire entre la valeur 1, une valeur comprise entre 1 et 3/5 une valeur comprise entre 3/4 et 1/2 et des valeurs comprises entre 1/2 et 1/3 (valeur maximum) et 3/4 et 1/2 (valeur minimum), et on détermine la dernière valeur par comparaison de la différence de niveau de lumière, point à point, entre le point projecté (B) calculé, résultat d'une moyenne bilinéaire entre quatre points de la première trame de transmission (t1=t'1) entourant le point d'impact (B) du vecteur mouvement déterminant la position projetée à partir de la position de la première trame paire, et le point calculé (D) résultat d'une moyenne pondérée sur quatre points de la trame impaire de transmission (t'1=t1) entourant le point à transmettre de la trame paire de transmission (t2).

8. Procédé selon la revendication 6 ou 7, caractérisé en ce que a est pris égal à : 1 pour les mouvements nuls; à 3/4 pour les mouvements inférieurs à 3 pixels haute définition par trame; à 3/5 pour les mouvements compris entre 3 et 4 pixels par trame ; et, lorsque les mouvements sont supérieurs à 5 pixels par trame, à des valeurs comprises entre 3/5 et 98/256, et fonction de la différence entre les valeurs de luminance du point projeté (B) à partir du vecteur mouvement et du point calculé (D), résultat d'une moyenne et de cinq seuils déterminés, définis à partir de deux seuils de base (S1, S2).

9. Application du procédé, selon l'une quelconque des revendications 1 à 8, à la diffusion de programmes HD MAC sur voie satellite, avec sous-échantillonnage spatio-temporel à saut de trame ou saut d'image.

10. Installation de diffusion de programmes de télévision haute définition compatible comprenant un émetteur muni d'un codeur HD et au moins un récepteur comprenant un décodeur HD, caractérisée en ce que :
   - ledit codeur HD (12) est prévu pour soumettre le signal d'analyse d'image source à un sous-échantillonnage spatio-temporel et à un filtrage non-linéaire de compensation de mouvement, conduisant à transmettre les points représentatifs des parties à forte activité temporelle d'une même image source sur au moins deux trames de transmission successives et à transmettre, en même temps que l'image, des données d'assistance définissant un champ de vecteurs mouvement et muni de moyens (30) pour soumettre avant transmission, les points (A) à transmettre sur chacune des trames de transmission (t2) autre que la première trame de transmission (t1) correspondant à une même image source analysée à une atténuation temporelle dans le sens du mouvement pour donner naissance à une trame de transmission modifiée (t'2), ladite atténuation étant fonction du vecteur mouvement associé aux points à transmettre et, pour affecter, à chaque point transmis (C) desdites parties dans la trame modifiée, une valeur de luminance intermédiaire entre celle de la position du point (A) dans l'image source analysée et celle de la position (B) qui est projetée depuis la position (A) dans la trame précédant celle comprenant le point (A), dans le sens opposé à celui du vecteur mouvement associé au point à transmettre (A) ; et
   - le décodeur (16) de reconstitution de l'image HD est précédé de moyens pour accentuer temporellement les points de la trame ou des trames d'image correspondant à la trame ou aux trames de transmission autres que la première.

**Patentansprüche**

1. Verfahren zum Senden von Fernsehprogrammen hoher Auflösung auf einem schmalen Band, gemäß welchem das Analysesignal des Ursprungsbilds hoher Auflösung einer räumlichen und zeitlichen Unter-Abtastung und einer nicht-linearen Bewegungskompensationsfilterung unterzogen wird, was dazu führt, die einem selben Ursprungsbild entsprechenden Punkte auf wenigstens zwei aufeinanderfolgenden Übertragungsteilbildern (t1, t2) zu übertragen und gleichzeitig mit dem Bild Hilfsdaten (DA) zu übertragen, welche ein Bewegungsvektorfeld definieren, dadurch gekennzeichnet, daß zur Verbesserung des von einem die Hilfsdaten nicht verwendenden Empfängers gelieferten kompatiblen Bildes von Teilen mit starker zeitlicher Aktivität vor Übertragung die Punkte (A), welche auf jedem der Übertragungsteilbilder (t2) außer dem einem selben analysierten Ursprungsbild entsprechenden ersten Übertragungsteilbild (t1) zu übertragen sind, einer zeitlichen Abschwächung in der Bewegungsrichtung unterzogen werden, um zu einem modifizierten Übertragungsteilbild (t'2) zu führen, wobei die Abschwächung eine Funktion des den zu übertragenden Punkten zugeordneten Bewegungsvektors ist und jedem übertragenen Punkt (C) der besagten Teile in dem modifizierten Teilbild einen Luminanzwert zuweist, welcher zwischen demjenigen der Position des Punkts (A) in dem analysierten Ursprungsbild und demjenigen der Position (B) in dem Teilbild liegt, welches dem den Punkt (A) umfassenden vorhergeht, welche von der Position (A) in der Richtung projiziert wird, die entgegengesetzt zu dem Bewegungsvektor ist, der dem zu übertragenden Punkt (A) zugeordnet ist.

2. Verfahren nach Anspruch 1, dadurch gekennzeichnet, daß beim hochauflösenden Empfang die Punkte des Teilbilds (oder der Teilbilder) des dem Übertragungsbild (oder den Übertragungsteilbildern) außer dem ersten Teilbild entsprechenden Bildes vor der Rekonstruktionsverarbeitung des hochauflösenden Bildes zeitlich akzentuiert werden.

3. Verfahren nach Anspruch 1, dadurch gekennzeichnet, daß beim Empfang durch einen die Hilfsdaten nicht nutzenden und ein kompatibles Bild liefernden Empfänger die übertragenen Halbbilder unverändert verwendet werden.

4. Verfahren nach einem der Ansprüche 1 bis 3, dadurch gekennzeichnet, daß die Luminanz an der projizierten Position durch bilineare Interpolation zwischen vier Punkten des ersten Übertragungsteilbilds (t1=t'1) bestimmt ist, welche den Auftreffpunkt (B) umgeben, der von der Position (A) in der Richtung projiziert wird, die entgegengesetzt zu dem Bewegungsvektor ist, der dem zu übertragenden Punkt (A) zugeordnet ist.

5. Verfahren nach einem der Ansprüche 1 bis 4, dadurch gekennzeichnet, daß jedem der auf dem zweiten modifizierten Übertragungsteilbild (t'2) übertragenen Punkte (C) ein Wert $I_t$ gegeben wird, der von dem Wert $I_0$ des Punkts in dem gleichen Übertragungsteilbild (t2) und dem Wert $I_v$ des Punkts an der projizierten Position durch die Formel:

$$I_t = a\,I_0 + (1 - a)\,I_v$$

abgeleitet ist, wobei a ein einen Minimalwert von 1/3 aufweisender fester oder adaptiver Koeffizient ist, und daß dem Punkt des rekonstruierten HD-Bilds der Wert $I_r$:

$$I_r = [I_t - (1 - a)\,I_v]/a$$

gegeben wird.

6. Verfahren nach Anspruch 5, dadurch gekennzeichnet, daß der Koeffizient a als Funktion der Amplitude des Bewegungsvektors, der dem zu übertragenden Punkt (A) der Übertragungsteilbilder (t2) außer dem ersten Übertragungsteilbild (t1) zugeordnet ist, und des Bildinhalts bestimmt wird.

7. Verfahren nach Anspruch 6, dadurch gekennzeichnet, daß der Koeffizient a durch binäre Selektion zwischen dem Wert 1, einem zwischen 1 und 3/5 gelegenen Wert, einem zwischen 3/4 und 1/2 gelegenen Wert und zwischen 1/2 und 1/3 (Maximalwert) und 3/4 und 1/2 (Minimalwert) gelegenen Werten bestimmt wird und der letzte Wert durch punktweisen Vergleich der Differenz des Helligkeitsgrads zwischen dem berechneten projizierten Punkt (B), welcher das Ergebnis einer bilinearen Mittelung zwischen vier, den Auftreffpunkt (B) des die projizierte Position von der Position des ersten geraden Teilbilds ausgehend bestimmenden Bewegungsvektors umgebenden Punkten des ersten Übertragungsteilbilds (t1=t'1) ist, und dem berechneten Punkt (D) bestimmt wird, welcher das Ergebnis einer gewichteten Mittelung über vier, den zu übertragenden Punkt des geraden Übertragungsteilbilds (t2) umgebende Punkte des ungeraden Übertragungsteilbilds (t'1=t1) ist.

8. Verfahren nach Anspruch 6 oder 7, dadurch gekennzeichnet, daß für a genommen wird: 1 für die Bewegungen null; 3/4 für die Bewegungen kleiner als 3 Hochauflösungs-Pixel pro Teilbild; 3/5 für die Bewegungen zwischen 3 und 4 Pixel pro Teilbild; und falls die Bewegungen größer sind als 5 Pixel pro Teilbild, Werte zwischen 3/5 und 98/256 und abhängig von der Differenz zwischen den Luminanzwerten des projizierten Punkts (B) aus dem Bewegungsvektor und dem berechneten Punkt (D), welcher das Ergebnis einer Mittelung ist, und von fünf bestimmten Schwellen, welche von zwei Basisschwellen (S1, S2) aus definiert sind.

9. Anwendung des Verfahrens nach einem der Ansprüche 1 bis 8 zum Senden von HDMAC-Programmen über Satellit mit räumlicher und zeitlicher Unter-Abtastung mit Teilbildsprung oder Bildsprung.

10. Anordnung zum Senden von kompatiblen Fernsehprogrammen hoher Auflösung, umfassend einen mit einem HD-Vercoder ausgestatteten Sender und wenigstens einen einen HD-Decoder umfassenden Empfänger, dadurch gekennzeichnet, daß:
    - der HD-Vercoder (12) vorgesehen ist, um das Analysesignal des Ursprungsbilds einer räumlichen und zeitlichen Unter-Abtastung und einer nicht-linearen Bewegungskompensationsfilterung zu unterziehen, was dazu führt, daß die Teilen mit starker zeitlicher Aktivität eines selben Ursprungsbilds entsprechenden Punkte auf wenigstens zwei aufeinanderfolgenden Übertragungsteilbildern übertragen werden und daß gleichzeitig mit dem Bild Hilfsdaten übertragen werden, welche ein Bewegungsvektorfeld definieren, und Mittel (30) aufweist, um vor Übertragung die Punkte (A), welche auf jedem der Übertragungsteilbilder (t2) außer dem einem selben analysierten Ursprungsbild entsprechenden ersten Übertragungsteilbild (t1) zu übertragen sind, einer zeitlichen Abschwächung in der Bewegungsrichtung zu unterziehen, um zu einem modifizierten Übertragungsteilbild (t'2) zu führen, wobei die Abschwächung eine Funktion des den zu übertragenden Punkten zugeordneten Bewegungsvektors ist, und um jedem übertragenen Punkt (C) der besagten Teile in dem modifizierten Teilbild einen Luminanzwert zuzuweisen, welcher zwischen demjenigen der Position des Punkts (A) in dem analysierten Ursprungsbild und demjenigen der Position (B) liegt, welche von der Position (A) in dem Teilbild, das dem den Punkt (A) umfassenden vorhergeht, in der Richtung projiziert wird, die entgegengesetzt zu dem Bewegungsvektor ist, der dem zu übertragenden Punkt (A) zugeordnet ist; und
    - der Decoder (16) zur Rekonstruktion des HD-Bilds vorgeschaltete Mittel aufweist, um die Punkte des Teilbilds oder der Teilbilder des dem Übertragungsteilbild oder den Übertragungsteilbildern außer dem ersten entsprechenden Bilds zeitlich zu akzentuieren.

## Claims

1. A method of broadcasting high definition television programmes over a narrow channel, in which the high definition source image analysis signal is subjected to space-time subsampling and to non-linear motion compensation filtering, leading to transmitting the representative points of a same source frame over at least two successive transmission fields (t1, t2) and transmitting, at the same time as the frame, assistance data (DA) defining a motion vector field, characterized in that, for improving the compatible image of the parts having a high time activity delivered by a receiver not using the assistance data, the points (A) to be transmitted by each of the transmission fields (t2) other than the first transmission field (t1) corresponding to a same analyzed source frame are subjected, prior to transmission, to a predetermined time attenuation in the direction of motion so as to generate a modified transmission field (t'2), said attenuation depending on the motion vector associated with the points to be transmitted and assigning, to each transmitted point (C) of said parts in the modified field, a luminance value which is intermediate between the value at the position of point (A) in the analyzed source image and the value at a position (B), in the field preceding the field comprising point (A), which is projected from position (A) in a direction which is opposed to that of the motion vector associated with the point (A) to be transmitted.

2. Method according to claim 1, characterized in that, during high definition reception, the points of the frame field (or fields) corresponding to the transmission field (or fields) other than the first field are enhanced in time before processing for reconstructing the high definition frame.

3. Method according to claim 1, characterized in that, during reception by a receiver which does not use the assistance data and delivers a compatible image, the transmitted fields (t1, t2) are used as they are.

4. Method according to any one of claims 1 to 3, characterized in that said luminance at the anticipated position is determined by bilinear interpolation between four points of the first transmission field (t1 = t'1) surrounding the impact point (B) which is projected from position (A) in a direction opposite to the direction of the motion vector associated to the point (A) to be transmitted.

5. Method according to any one of claims 1 to 4, characterized in that each of the points (C) transmitted over the second modified transmission field (t'2) is given a value $I_t$ derived from the value $i_0$ of the point in the same transmission field (t2) and from the value $I_v$ of the point at the anticipated position by the formula:

$$I_t = a I_0 + (1 - a) I_v$$

a being a fixed or adaptive coefficient having a minimum value of 1/3 and in that the point of the restored HD frame is given the value $I_r$:

$$I_r = [I_t - (1 - a) I_v]/a.$$

6. Method according to claim 5, characterized in that the coefficient a is determined as a function of the amplitude of the motion vector associated to the point (A) to be transmitted of the transmission fields (t2) other than the first transmission field (t1) and as a function of the contents of the image.

7. Method according to claim 6, characterized in that the coefficient a is determined by binary selection between the value 1, a value between 1 and 3/5, a value between 3/4 and 12 and values between 1/2 and 1/3 (maximum value) and 3/4 and 1/2 (minimum value) and the last value is determined by comparing the difference of light intensity, point to point, between the computed projected point (B), resulting from a bilinear mean value between four points of the first transmission field (t1 = t'1) surrounding the impact point (B) of the motion vector which determines the projected position from the position of the first even field and the computed point (D) which results from a weighted average between four points of the odd transmission field (t'1 = t1) surrounding the point to be transmitted of the even transmission field (t2).

8. Method according to claim 6 or 7, characterized in that a is taken equal: to 1 for zero movements, to 3/5 for movements less than 2 high definition pixels per field; to 3/5 for movements between 3 and 4 pixels per field; and, when the movements are greater than 5 pixels per field, to values between 3/5 and 98/256, and depending on the difference between the values of the luminance of the point (B) projected by the motion vector and the computed point (D), resulting from averaging, and on five predetermined thresholds, defined from two base thresholds (S1, S2).

9. Application of the method according to one of claims 1 to 8 to the satellite broadcasting of HD-MAC programs with spatio-temporal subsampling with field skip or frame skip.

10. Installation for broadcasting compatible high definition television programs comprising a transmitter having an HD encoder and at least one receiver comprising an HD decoder, characterized in that:
   - said HD encoder (12) is provided for subjecting the source image analysis signal to spatio-temporal subsampling and to non-linear movement compensation filtering, leading to transmitting the points representative of the same source frame over at least two successive transmission fields and in transmitting, at the same time as the image, frame assistance data defining a field of motion vectors and having means (30) for subjecting, before transmission, the points (A) to be transmitted on each of the transmission fields (t2) other than the first transmission field (t1) corresponding to a same analyzed source frame to a time attenuation in the direction of motion for generating a modified transmission field (t'2), said attenuation being a function of the motion vector associated to the points to be transmitted and for assigning, to each transmitted point (C) of said parts in the modified frame, a luminance value which is intermediate between that at position of point (A) in the analyzed source image and that at position (B) which is projected from position (A) in the field before the field which comprises point (A), in a direction opposite to that of the motion vector associated to the point to be transmitted (A); and
   - the decoder (16) for reconstructing the HD frame is preceded by means for accentuating in time the points of the frame field or fields corresponding to the transmission field or fields other than the first one.

FIG.1.

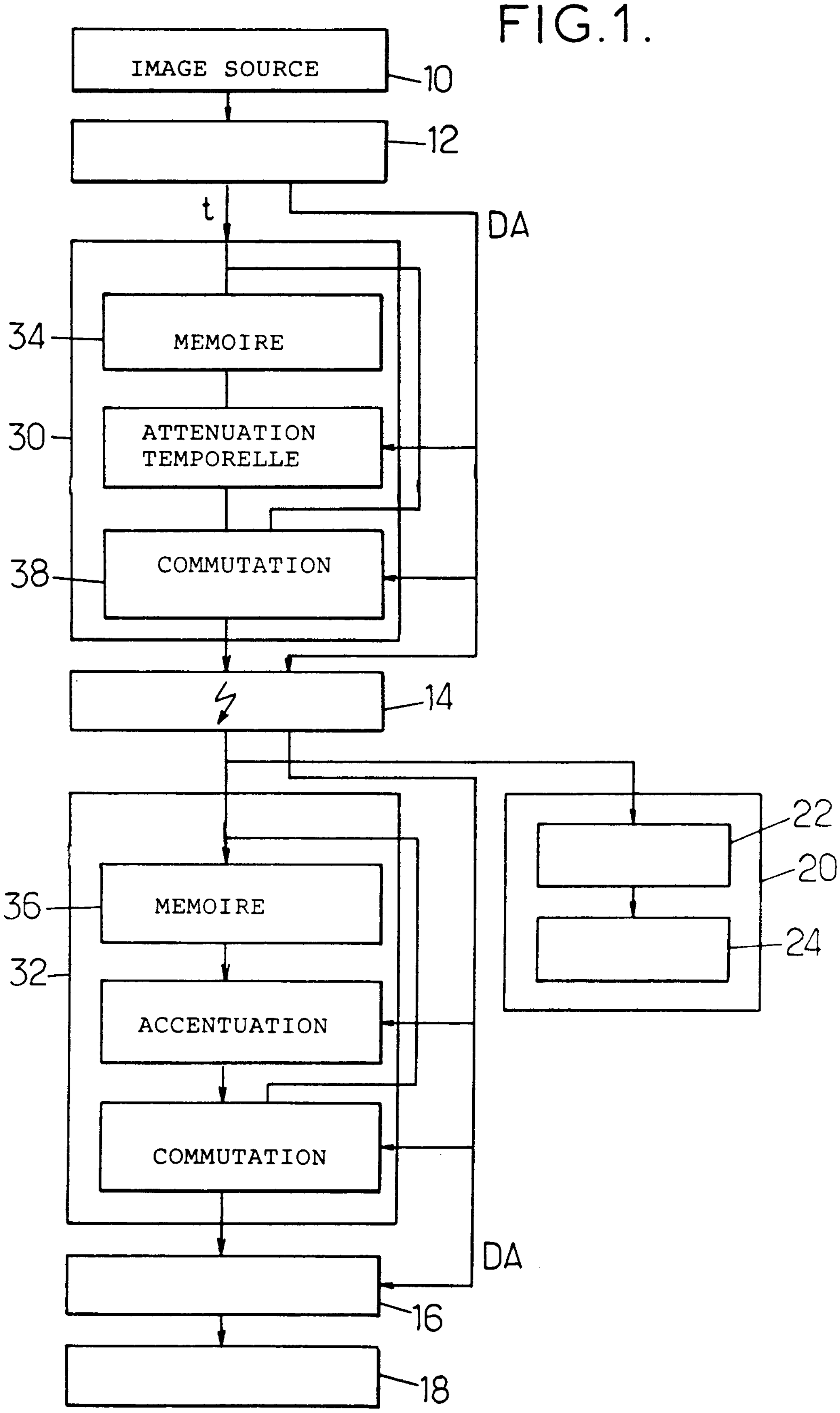
IMAGE SOURCE
10
12
t
DA
MEMOIRE
34
30
ATTENUATION
TEMPORELLE
COMMUTATION
38
14
22
20
24
MEMOIRE
36
32
ACCENTUATION
COMMUTATION
DA
16
18

FIG.2.

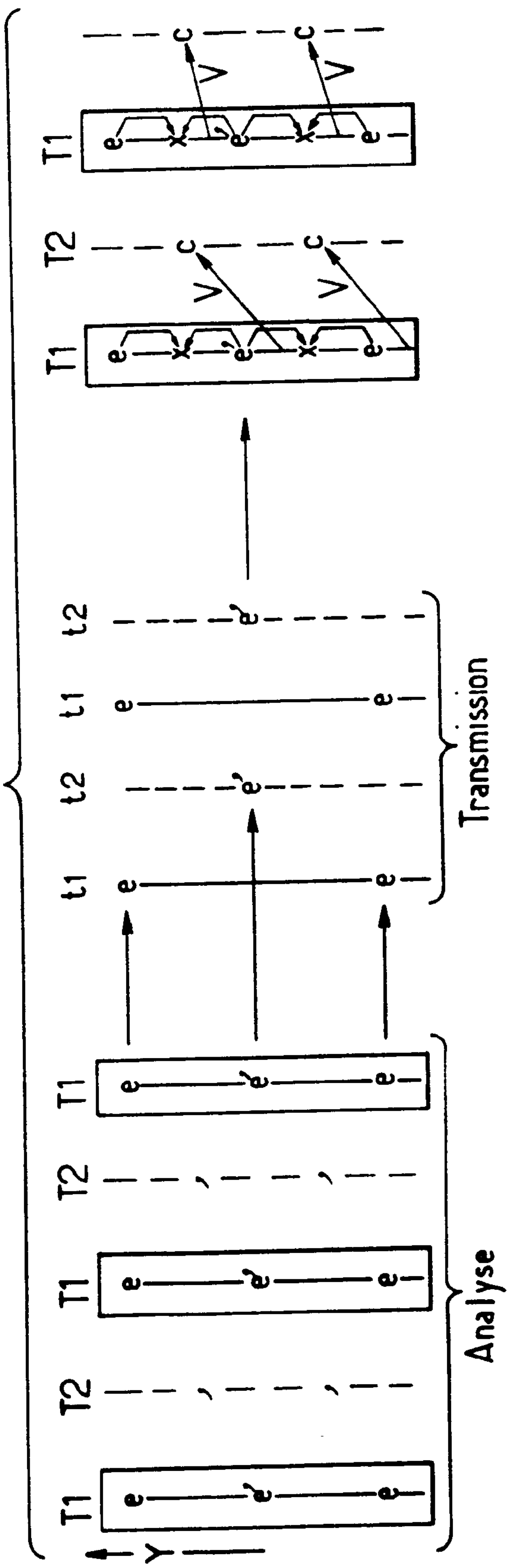
T1
T2
T1
T2
T1
t1
t2
t1
t2
T1
T2
T1
V
c
Analyse
Transmission
Y

FIG.3.

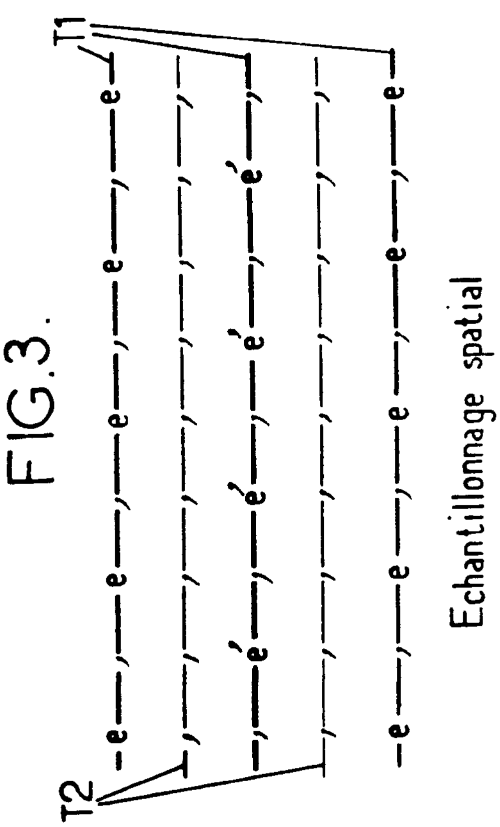
T1
T2
Echantillonnage spatial

FIG.5.

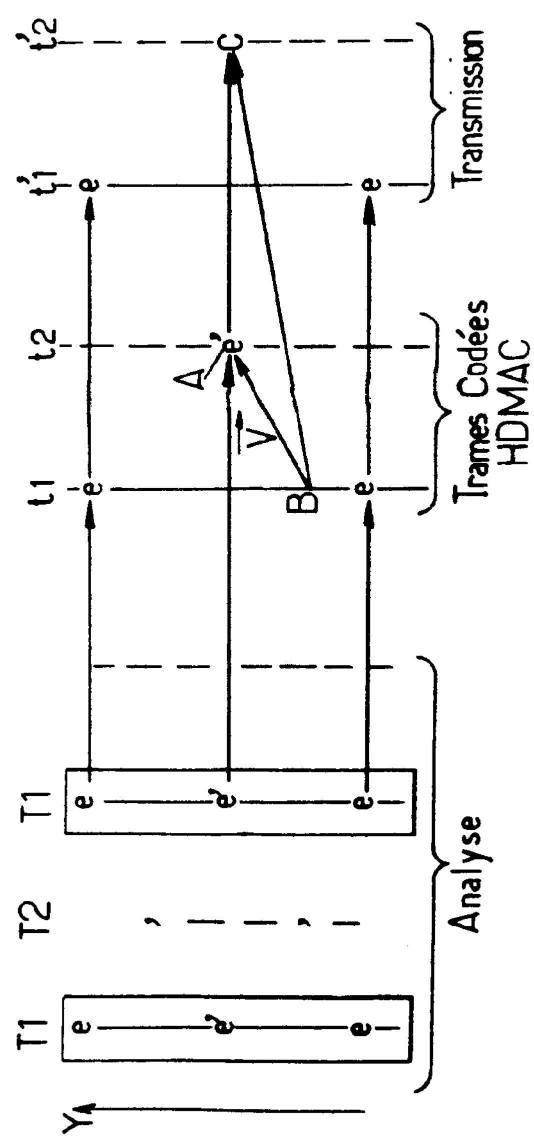


FIG.4.

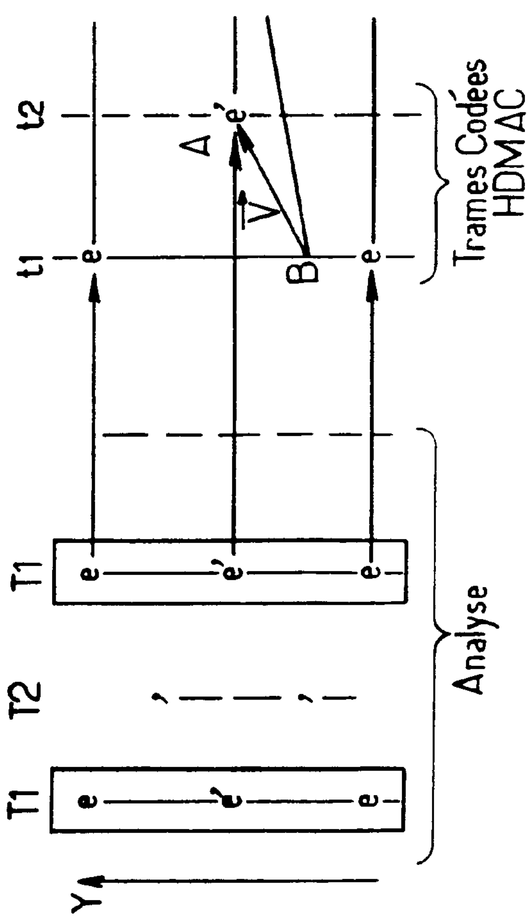


FIG.6.

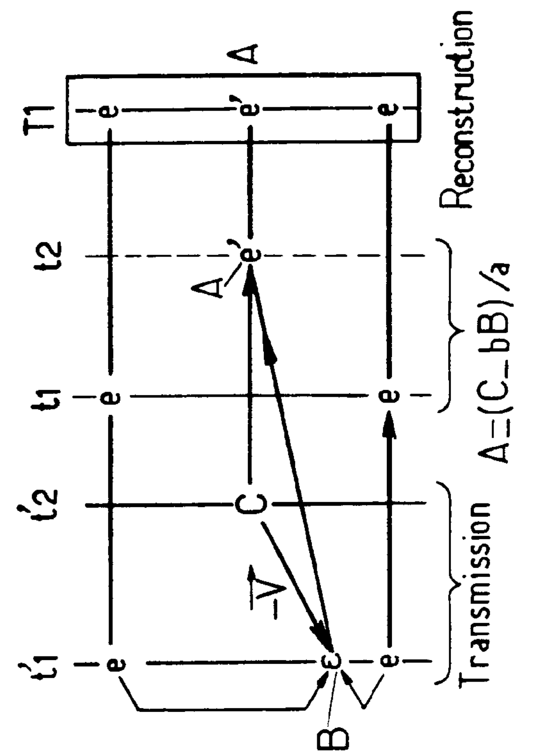

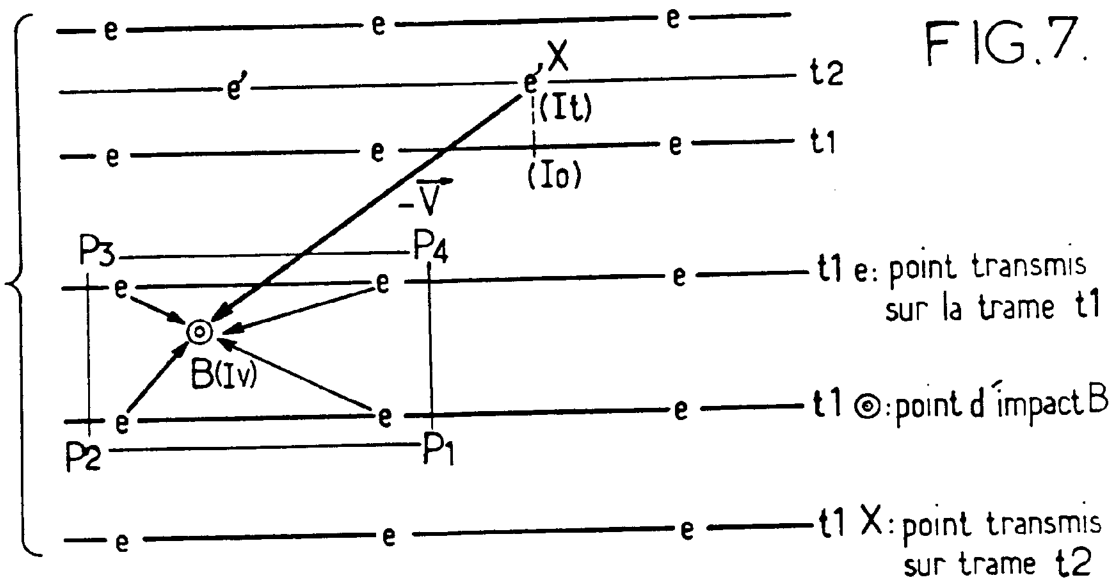


FIG.7.

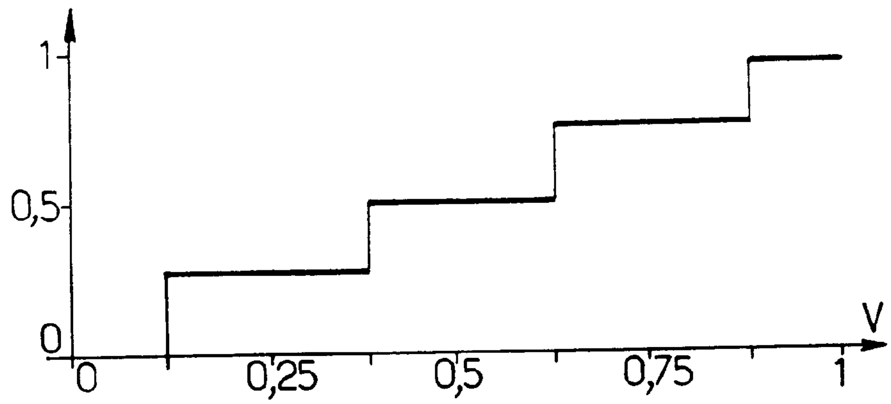


FIG.9

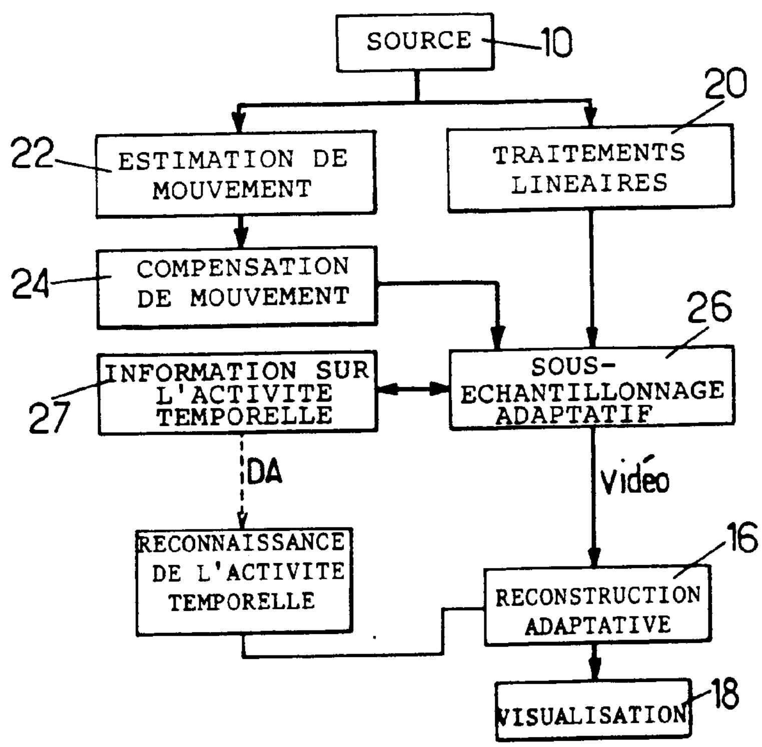


FIG.10.

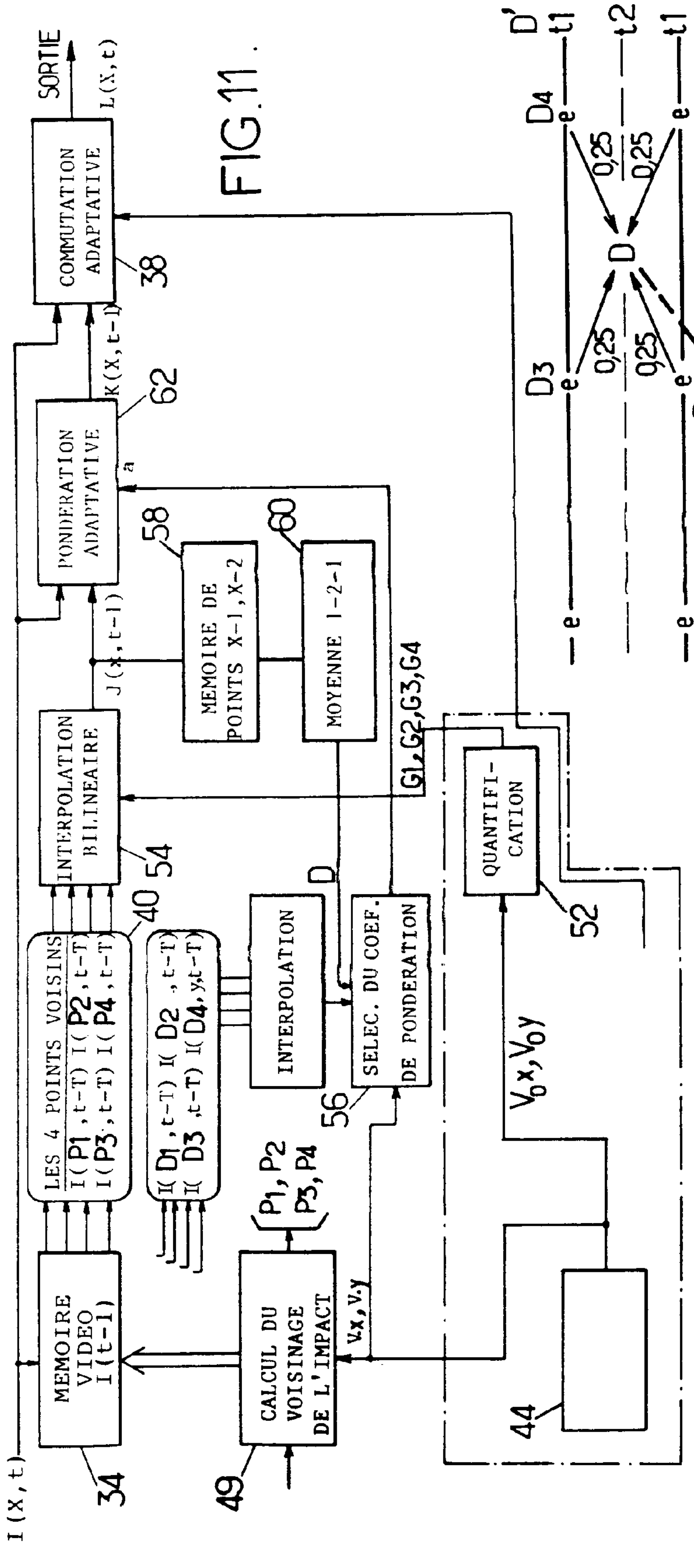

SORTIE
L(X,t)
COMMUTATION ADAPTATIVE
38
K(X,t-1)
62
PONDERATION ADAPTATIVE
a
58
MEMOIRE DE POINTS X-1,X-2
60
MOYENNE 1-2-1
J(X,t-1)
INTERPOLATION BILINEAIRE
54
G1,G2,G3,G4
QUANTIFI-CATION
52
D
40
LES 4 POINTS VOISINS
I(P1,t-T) I(P2,t-T)
I(P3,t-T) I(P4,t-T)
I(D1,t-T) I(D2,t-T)
I(D3,t-T) I(D4,y,t-T)
INTERPOLATION
SELEC. DU COEF. DE PONDERATION
56
$V_0x, V_0y$
P1, P2
P3, P4
MEMOIRE VIDEO I(t-1)
CALCUL DU VOISINAGE DE L'IMPACT
V.x, V.y
I(X,t)
34
49
44


FIG.11.

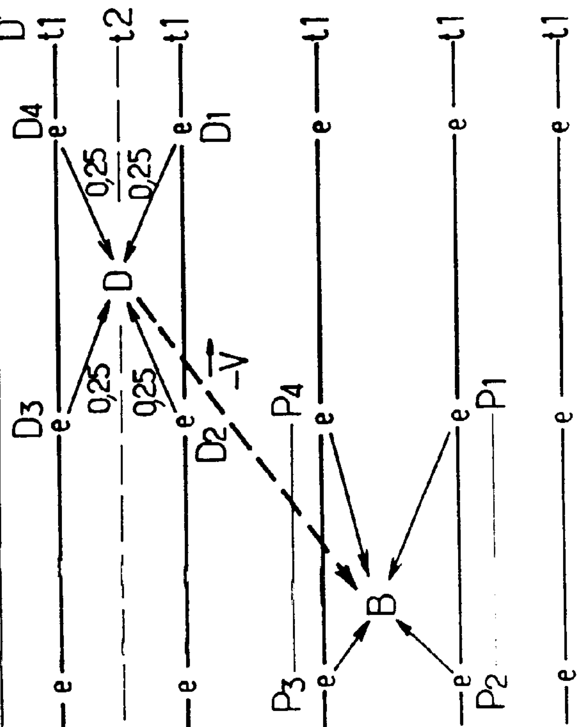

D'
t1
t2
t1
t1
t1
t1
D4
D1
0,25
0,25
D
0,25
0,25
-V
D3
D2
P4
P1
B
P3
P2
e


FIG.8.

FIG.11A

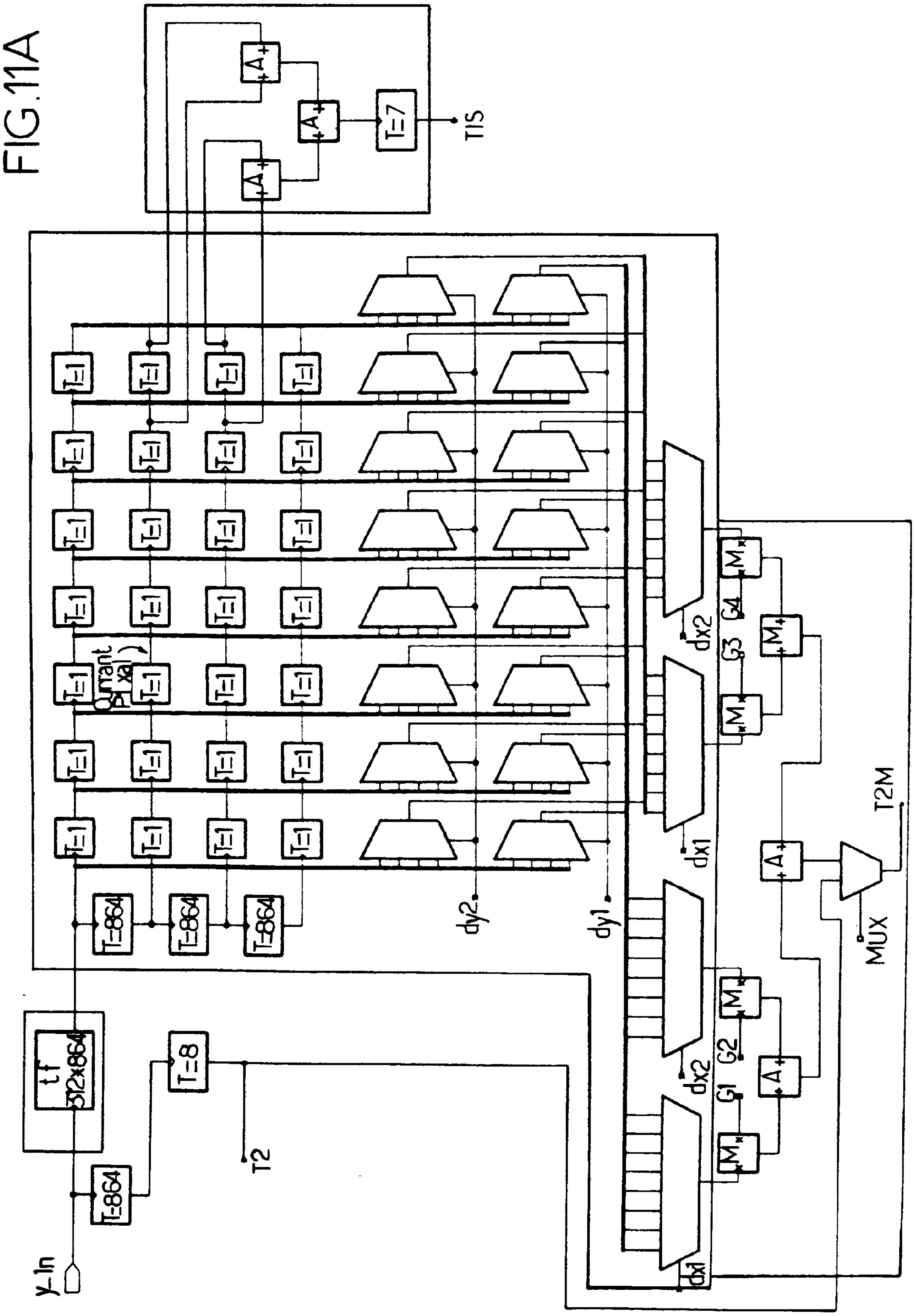
y_In
T=864
tf
312x864
T=8
T2
T=1
Current Pixel
T=7
TIS
dy2
dy1
dx1
dx2
G1
G2
G3
G4
MUX
T2M

FIG.11B.

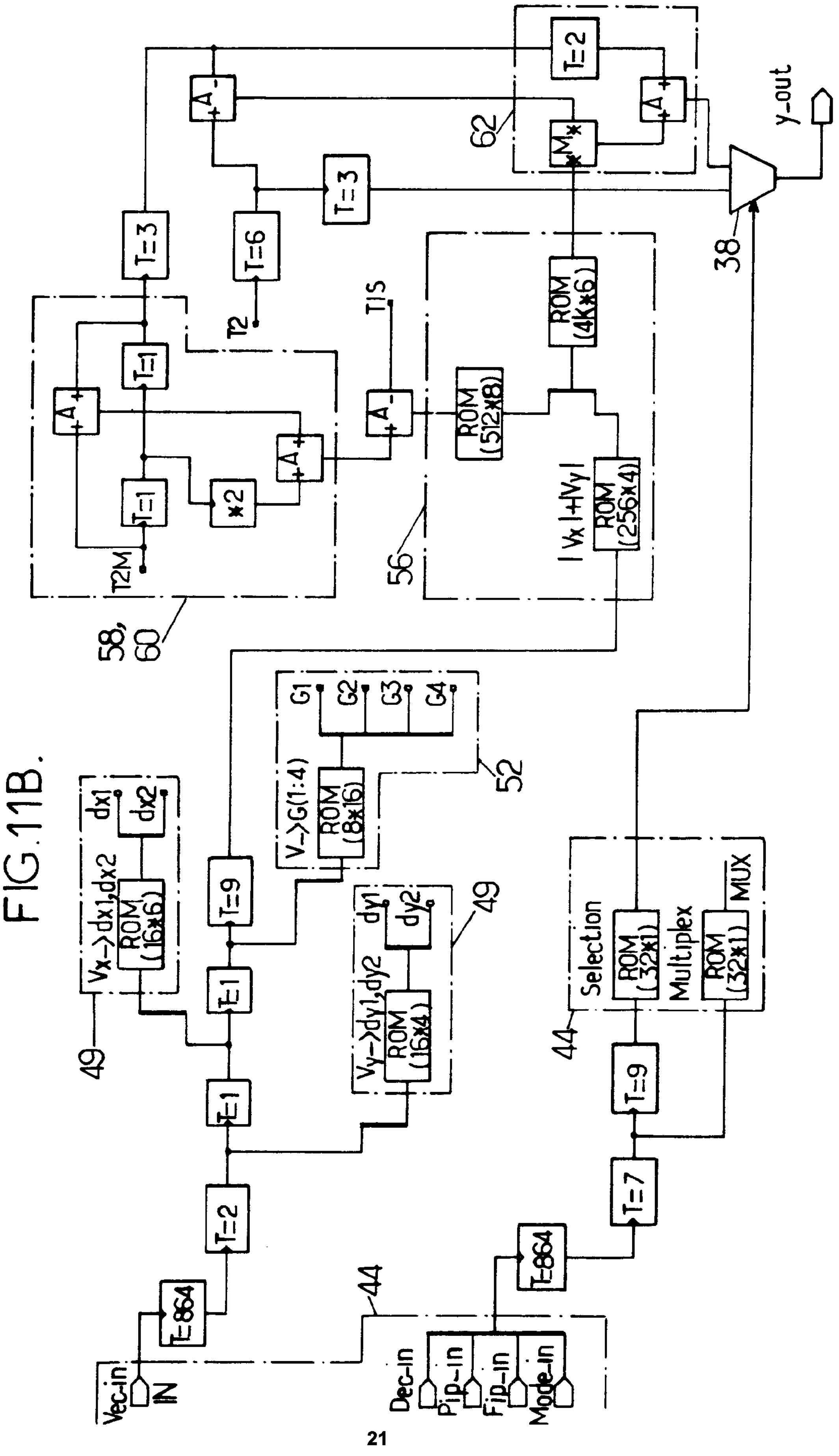
Vec-in
IN
Dec-in
Pip-in
Fip-in
Mode-in
44
T=864
T=2
T=1
T=1
T=9
49
Vx->dx1,dx2
ROM (16*6)
dx1
dx2
Vy->dy1,dy2
ROM (16*4)
dy1
dy2
V->G(1:4)
ROM (8*16)
G1
G2
G3
G4
52
58, 60
T2M
*2
A
T=3
T=6
T2
T/S
56
ROM (512*8)
|Vx|+|Vy|
ROM (256*4)
ROM (4K*6)
T=3
62
M*
T=2
38
y-out
T=864
T=7
T=9
Selection
ROM (32*1)
Multiplex
ROM (32*1)
MUX

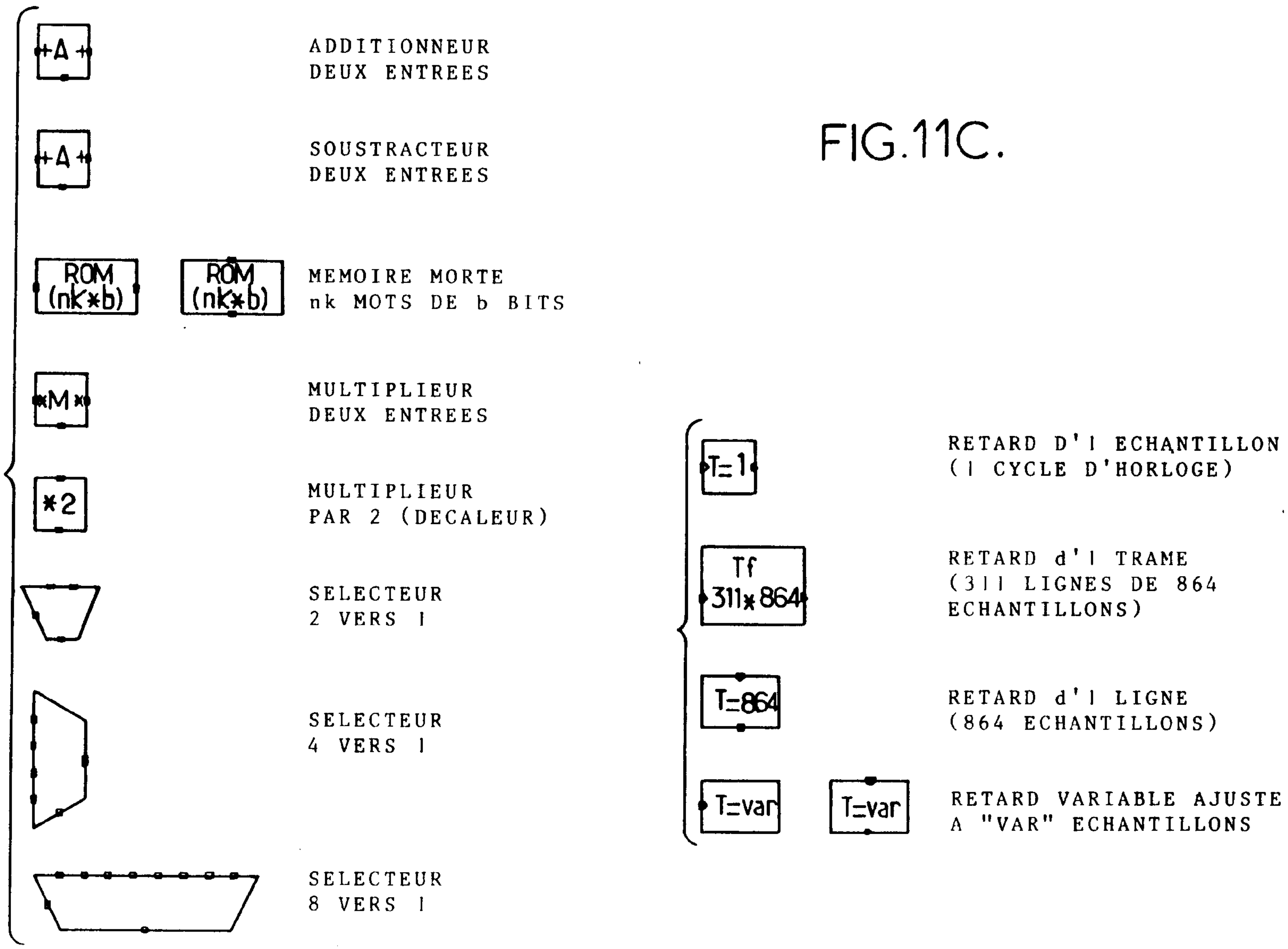
+A+
ADDITIONNEUR
DEUX ENTREES
+A+
SOUSTRACTEUR
DEUX ENTREES
ROM (nk*b)
ROM (nk*b)
MEMOIRE MORTE
nk MOTS DE b BITS
*M*
MULTIPLIEUR
DEUX ENTREES
*2
MULTIPLIEUR
PAR 2 (DECALEUR)
SELECTEUR
2 VERS 1
SELECTEUR
4 VERS 1
SELECTEUR
8 VERS 1
T=1
RETARD D'1 ECHANTILLON
(1 CYCLE D'HORLOGE)
Tf
311*864
RETARD d'1 TRAME
(311 LIGNES DE 864
ECHANTILLONS)
T=864
RETARD d'1 LIGNE
(864 ECHANTILLONS)
T=var
T=var
RETARD VARIABLE AJUSTE
A "VAR" ECHANTILLONS

FIG.11C.

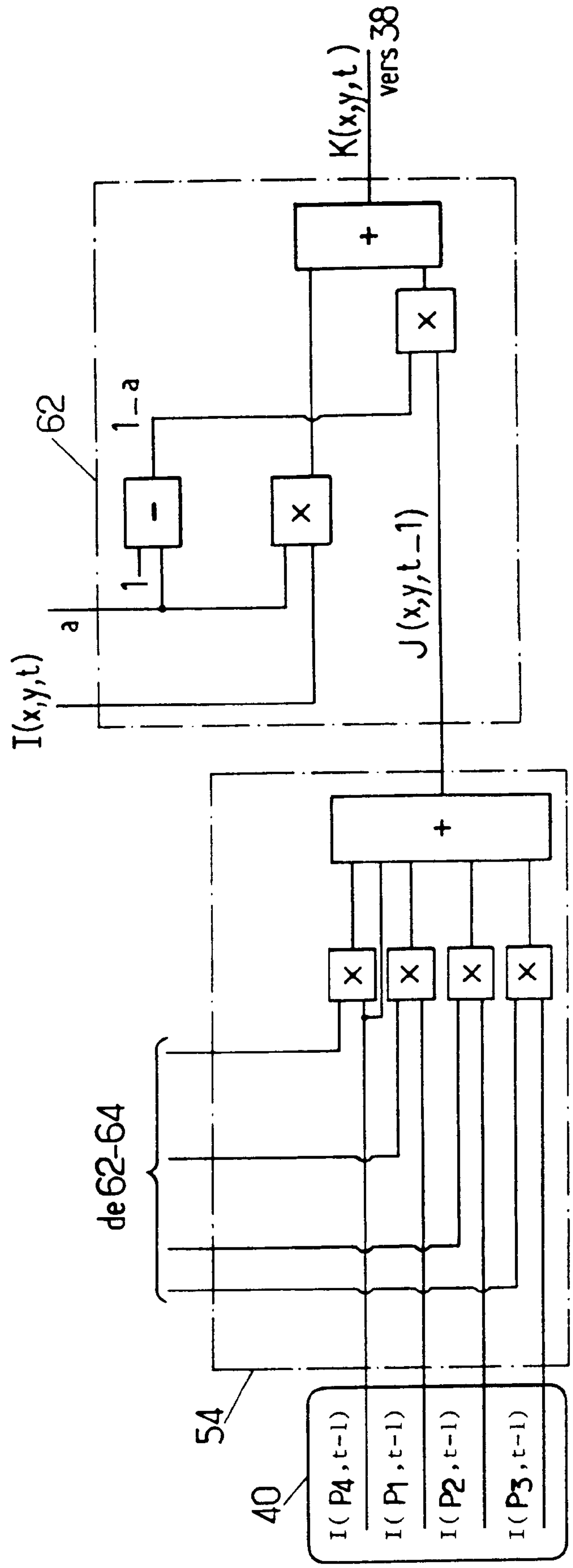
K(x,y,t)
vers 38
62
1–a
1
a
I(x,y,t)
J(x,y,t–1)
de 62-64
54
40
I(P4,t-1)
I(P1,t-1)
I(P2,t-1)
I(P3,t-1)

FIG.12.

# FIG.13.

| G1<br>Vy \ Vx : | -6 | -5 | -4 | -3 | -2 | -1 | 0 | 1 | 2 | 3 | 4 | 5 | 6 |
|---|---|---|---|---|---|---|---|---|---|---|---|---|---|
| -6 : | 1/2 | 0 | 1/2 | 0 | 1/2 | 0 | 1/2 | 0 | 1/2 | 0 | 1/2 | 0 | 1/2 |
| -5 : | 1/8 | 0 | 1/8 | 0 | 1/8 | 0 | 1/8 | 0 | 1/8 | 0 | 1/8 | 0 | 1/8 |
| -4 : | 1/4 | 0 | 1/4 | 0 | 1/4 | 0 | 1/4 | 0 | 1/4 | 0 | 1/4 | 0 | 1/4 |
| -3 : | 3/8 | 0 | 3/8 | 0 | 3/8 | 0 | 3/8 | 0 | 3/8 | 0 | 3/8 | 0 | 3/8 |
| -2 : | 1/2 | 0 | 1/2 | 0 | 1/2 | 0 | 1/2 | 0 | 1/2 | 0 | 1/2 | 0 | 1/2 |
| -1 : | 1/8 | 0 | 1/8 | 0 | 1/8 | 0 | 1/8 | 0 | 1/8 | 0 | 1/8 | 0 | 1/8 |
| 0 : | 1/4 | 0 | 1/4 | 0 | 1/4 | 0 | 1/4 | 0 | 1/4 | 0 | 1/4 | 0 | 1/4 |
| +1 : | 3/8 | 0 | 3/8 | 0 | 3/8 | 0 | 3/8 | 0 | 3/8 | 0 | 3/8 | 0 | 3/8 |
| +2 : | 1/2 | 0 | 1/2 | 0 | 1/2 | 0 | 1/2 | 0 | 1/2 | 0 | 1/2 | 0 | 1/2 |
| +3 : | 1/8 | 0 | 1/8 | 0 | 1/8 | 0 | 1/8 | 0 | 1/8 | 0 | 1/8 | 0 | 1/8 |
| +4 : | 1/4 | 0 | 1/4 | 0 | 1/4 | 0 | 1/4 | 0 | 1/4 | 0 | 1/4 | 0 | 1/4 |
| +5 : | 3/8 | 0 | 3/8 | 0 | 3/8 | 0 | 3/8 | 0 | 3/8 | 0 | 3/8 | 0 | 3/8 |
| +6 : | 1/2 | 0 | 1/2 | 0 | 1/2 | 0 | 1/2 | 0 | 1/2 | 0 | 1/2 | 0 | 1/2 |

| G2<br>Vy \ Vx : | -6 | -5 | -4 | -3 | -2 | -1 | 0 | 1 | 2 | 3 | 4 | 5 | 6 |
|---|---|---|---|---|---|---|---|---|---|---|---|---|---|
| -6 : | 1/2 | 1 | 1/2 | 1 | 1/2 | 1 | 1/2 | 1 | 1/2 | 1 | 1/2 | 1 | 1/2 |
| -5 : | 1/8 | 1/4 | 1/8 | 1/4 | 1/8 | 1/4 | 1/8 | 1/4 | 1/8 | 1/4 | 1/8 | 1/4 | 1/8 |
| -4 : | 1/4 | 1/2 | 1/4 | 1/2 | 1/4 | 1/2 | 1/4 | 1/2 | 1/4 | 1/2 | 1/4 | 1/2 | 1/4 |
| -3 : | 3/8 | 3/4 | 3/8 | 3/4 | 3/8 | 3/4 | 3/8 | 3/4 | 3/8 | 3/4 | 3/8 | 3/4 | 3/8 |
| -2 : | 1/2 | 1 | 1/2 | 1 | 1/2 | 1 | 1/2 | 1 | 1/2 | 1 | 1/2 | 1 | 1/2 |
| -1 : | 1/8 | 1/4 | 1/8 | 1/4 | 1/8 | 1/4 | 1/8 | 1/4 | 1/8 | 1/4 | 1/8 | 1/4 | 1/8 |
| 0 : | 1/4 | 1/2 | 1/4 | 1/2 | 1/4 | 1/2 | 1/4 | 1/2 | 1/4 | 1/2 | 1/4 | 1/2 | 1/4 |
| +1 : | 3/8 | 3/4 | 3/8 | 3/4 | 3/8 | 3/4 | 3/8 | 3/4 | 3/8 | 3/4 | 3/8 | 3/4 | 3/8 |
| +2 : | 1/2 | 1 | 1/2 | 1 | 1/2 | 1 | 1/2 | 1 | 1/2 | 1 | 1/2 | 1 | 1/2 |
| +3 : | 1/8 | 1/4 | 1/8 | 1/4 | 1/8 | 1/4 | 1/8 | 1/4 | 1/8 | 1/4 | 1/8 | 1/4 | 1/8 |
| +4 : | 1/4 | 1/2 | 1/4 | 1/2 | 1/4 | 1/2 | 1/4 | 1/2 | 1/4 | 1/2 | 1/4 | 1/2 | 1/4 |
| +5 : | 3/8 | 3/4 | 3/8 | 3/4 | 3/8 | 3/4 | 3/8 | 3/4 | 3/8 | 3/4 | 3/8 | 3/4 | 3/8 |
| +6 : | 1/2 | 1 | 1/2 | 1 | 1/2 | 1 | 1/2 | 1 | 1/2 | 1 | 1/2 | 1 | 1/2 |

$8^{*}G1 = ((Vx + 1)\ \text{modulo}\ 2)^{*}((Vy + 1)\ \text{modulo}\ 4 + 1)$

$8^{*}G2 : (1 + (Vx\ \text{modulo}\ 2))^{*}\ ((Vy + 1)\ \text{modulo}\ 4 + 1)$

FIG.14.

G3

| Vy \ Vx : | -6 | -5 | -4 | -3 | -2 | -1 | 0 | 1 | 2 | 3 | 4 | 5 | 6 |
|---|---|---|---|---|---|---|---|---|---|---|---|---|---|
| -6 : | 0 | 0 | 0 | 0 | 0 | 0 | 0 | 0 | 0 | 0 | 0 | 0 | 0 |
| -5 : | 3/8 | 0 | 3/8 | 0 | 3/8 | 0 | 3/8 | 0 | 3/8 | 0 | 3/8 | 0 | 3/8 |
| -4 : | 1/4 | 0 | 1/4 | 0 | 1/4 | 0 | 1/4 | 0 | 1/4 | 0 | 1/4 | 0 | 1/4 |
| -3 : | 1/8 | 0 | 1/8 | 0 | 1/8 | 0 | 1/8 | 0 | 1/8 | 0 | 1/8 | 0 | 1/8 |
| -2 : | 0 | 0 | 0 | 0 | 0 | 0 | 0 | 0 | 0 | 0 | 0 | 0 | 0 |
| -1 : | 3/8 | 0 | 3/8 | 0 | 3/8 | 0 | 3/8 | 0 | 3/8 | 0 | 3/8 | 0 | 3/8 |
| 0 : | 1/4 | 0 | 1/4 | 0 | 1/4 | 0 | 1/4 | 0 | 1/4 | 0 | 1/4 | 0 | 1/4 |
| +1 : | 1/8 | 0 | 1/8 | 0 | 1/8 | 0 | 1/8 | 0 | 1/8 | 0 | 1/8 | 0 | 1/8 |
| +2 : | 0 | 0 | 0 | 0 | 0 | 0 | 0 | 0 | 0 | 0 | 0 | 0 | 0 |
| +3 : | 3/8 | 0 | 3/8 | 0 | 3/8 | 0 | 3/8 | 0 | 3/8 | 0 | 3/8 | 0 | 3/8 |
| +4 : | 1/4 | 0 | 1/4 | 0 | 1/4 | 0 | 1/4 | 0 | 1/4 | 0 | 1/4 | 0 | 1/4 |
| +5 : | 1/8 | 0 | 1/8 | 0 | 1/8 | 0 | 1/8 | 0 | 1/8 | 0 | 1/8 | 0 | 1/8 |
| +6 : | 0 | 0 | 0 | 0 | 0 | 0 | 0 | 0 | 0 | 0 | 0 | 0 | 0 |

G4

| Vy \ Vx : | -6 | -5 | -4 | -3 | -2 | -1 | 0 | 1 | 2 | 3 | 4 | 5 | 6 |
|---|---|---|---|---|---|---|---|---|---|---|---|---|---|
| -6 : | 0 | 0 | 0 | 0 | 0 | 0 | 0 | 0 | 0 | 0 | 0 | 0 | 0 |
| -5 : | 3/8 | 3/4 | 3/8 | 3/4 | 3/8 | 3/4 | 3/8 | 3/4 | 3/8 | 3/4 | 3/8 | 3/4 | 3/8 |
| -4 : | 1/4 | 1/2 | 1/4 | 1/2 | 1/4 | 1/2 | 1/4 | 1/2 | 1/4 | 1/2 | 1/4 | 1/2 | 1/4 |
| -3 : | 1/8 | 1/4 | 1/8 | 1/4 | 1/8 | 1/4 | 1/8 | 1/4 | 1/8 | 1/4 | 1/8 | 1/4 | 1/8 |
| -2 : | 0 | 0 | 0 | 0 | 0 | 0 | 0 | 0 | 0 | 0 | 0 | 0 | 0 |
| -1 : | 3/8 | 3/4 | 3/8 | 3/4 | 3/8 | 3/4 | 3/8 | 3/4 | 3/8 | 3/4 | 3/8 | 3/4 | 3/8 |
| 0 : | 1/4 | 1/2 | 1/4 | 1/2 | 1/4 | 1/2 | 1/4 | 1/2 | 1/4 | 1/2 | 1/4 | 1/2 | 1/4 |
| +1 : | 1/8 | 1/4 | 1/8 | 1/4 | 1/8 | 1/4 | 1/8 | 1/4 | 1/8 | 1/4 | 1/8 | 1/4 | 1/8 |
| +2 : | 0 | 0 | 0 | 0 | 0 | 0 | 0 | 0 | 0 | 0 | 0 | 0 | 0 |
| +3 : | 3/8 | 3/4 | 3/8 | 3/4 | 3/8 | 3/4 | 3/8 | 3/4 | 3/8 | 3/4 | 3/8 | 3/4 | 3/8 |
| +4 : | 1/4 | 1/2 | 1/4 | 1/2 | 1/4 | 1/2 | 1/4 | 1/2 | 1/4 | 1/2 | 1/4 | 1/2 | 1/4 |
| +5 : | 1/8 | 1/4 | 1/8 | 1/4 | 1/8 | 1/4 | 1/8 | 1/4 | 1/8 | 1/4 | 1/8 | 1/4 | 1/8 |
| +6 : | 0 | 0 | 0 | 0 | 0 | 0 | 0 | 0 | 0 | 0 | 0 | 0 | 0 |

$$8^{*}G3 = (Vx + 1)\ \text{modulo}\ 2)^{*}(3 - (Vy + 1)\ \text{modulo}\ 4)$$

$$8^{*}G4 = (1 + (Vx\ \text{modulo}\ 2))^{*}(3 - (Vy + 1)\ \text{modulo}\ 4)$$

FIG.15